# EUROPEAN PATENT APPLICATION

(11) **EP 1 792 960 A1**
(43) Date of publication of application: **06.06.2007**
(21) Application number: 05783551.4
(22) Date of filing: 08.09.2005
(51) Int. Cl.: C09D 17/00, B41J 2/01, B41M 5/00, C09B 67/20, C09B 67/46, C09D 11/00

(54) **PIGMENT, METHOD FOR PRODUCING PIGMENT, PIGMENT DISPERSION, METHOD FOR PRODUCING PIGMENT DISPERSION, RECORDING INK, RECORDING METHOD, AND RECORDED IMAGE**

(30) Priority: 08.09.2004 JP 2004261710
(71) Applicant: CANON KABUSHIKI KAISHA, Ohta-ku Tokyo 146-8501 (JP)
(72) Inventor: KAWABE, Minako, c/o CANON KABUSHIKI KAISHA, Tokyo, 1468501 (JP); NAGASHIMA, Akira, c/o CANON KABUSHIKI KAISHA, Tokyo, 1468501 (JP); ISHIKAWA, Takayuki, c/o CANON KABUSHIKI KAISHA, Tokyo, 1468501 (JP); SUGAMA, Sadayuki, c/o CANON KABUSHIKI KAISHA, Tokyo, 1468501 (JP)
(74) Representative: TBK-Patent
(86) International application number: PCT/JP2005/016983
(87) International publication number: WO 2006/028268

(57) **Abstract**

There are provided a novel pigment dispersion that can be suitably used as a coloring material for inks, especially inks for ink-jet recording, comprising a colored pigment in primary particles dispersed stably in a liquid medium, and a process for producing the pigment dispersion. A pigment dispersion comprising a colored pigment that is substantially of a primary particle maintaining type and is dispersed in a liquid medium, a process for producing the pigment dispersion, and an ink and recorded image using the pigment dispersion.

## Description

### TECKNNICAL FIELD

The present invention relates to a pigment, a process for producing a pigment, a pigment dispersion, a process for producing a pigment dispersion, and a recording ink using the same, a recording method and a recorded image. More particularly, the present invention relates to a pigment dispersion exhibiting dispersion stability and having a uniform particle size, a process for producing the pigment dispersion, a recording ink using the pigment dispersion, and a recording method and recorded image using the recording ink.

### BACKGROUND ART

To date, dyes have been used as coloring materials for ink-jet recording liquid (ink) of which high definition is required. Inks using dyes provide images with features such as high degree of transparency, high definition and superior color rendering property, but in many cases it is inferior in image fastness such as light fastness and water resistance. In recent years, to cope with the inferiority in image fastness, pigment inks have been manufactured that use in place of dyes organic pigments and carbon black as coloring materials. Thus coloring materials used for ink have been shifting from dye to pigment in view of increasing image fastness, and, for example, the following various proposals have been made.

For example, a compound, and an ink using the compound, is disclosed that is prepared to have a structure having a group compatible with a given solvent and thus is soluble in the solvent, wherein the group compatible with the given solvent may be detached by retro Diels-Alder reaction to allow an irreversible decrease in the solubility for the solvent (see Japanese Patent Application Laid-Open No. 2003-327588). When this compound is used as a coloring material, it is dissolved in an ink solvent (i.e., in a dye-like state), but it may be made insoluble (i.e., in a pigment state) in the solvent to increase image fastness when applied onto a recording material and subjected to retro Diels-Alder reaction. However, this proposed method requires means to apply external energy, such as heat, light, electromagnetic wave and radiation, to cause the above reaction of the compound dissolved in a solvent (i.e., in a dye-like state) when applied onto a recording material.

In addition, a phase change ink is disclosed that uses a polymerization compound capable of thermally reversible Diels-Alder reaction as a viscosity temperature control material for ink-jet ink carrier (see Japanese Patent Application Laid-Open No. H11-349877). This proposed method is disadvantageous in that due to reversible reaction cooling under a reduced solubility condition can induce cyclization reaction and cause solubility to increase.

In addition, a method is disclosed by which a compound (dye) undergoing retro Diels-Alder reaction is applied onto a recording medium containing a metal compound, and the compound (dye) undergoing retro Diels-Alder reaction is subjected to retro Diels-Alder reaction to form a pigment (see Japanese Patent Application Laid-Open No. 2004-262807). Although the resultant pigment has been converted on the recording medium to a pigment insoluble in the solvent, the resultant image has considerable color irregularities. Examination of the image with various apparatus such as X-ray diffractometer revealed heterogeneous pigment formation, mixed crystals and aggregation, and indicated the necessity for single crystallization of pigment to provide satisfactory images.

In addition, a method of controlling polarity (solubility, agglutination property) is disclosed that uses decomposition reaction of a triaryl methane compound by the UV light or heat , and optically and thermally reversible compounds such as photochromic compounds (see Japanese Patent Application Laid-Open No. H10-31275). Although irreversible state may be formed because the polar region is of a system which is decomposed through radical ion cleavage, oxidation degradation reaction can be induced due to extreme instability of by-products. In addition, because photochromic reaction is a reversible reaction for visible and UV light and heat, maintaining a constant state is difficult.

Furthermore, a method of improving image fastness is disclosed that causes Diels-Alder reaction of ink when applied onto a recording material (see Japanese Patent Application Laid-Open No. H7-61117). In addition, a method of preventing a yellowing phenomenon caused by retro Diels-Alder reaction of a component of a recording medium is disclosed in which potent dienophiles are contained in the recording medium as a component to produce Diels-Alder reaction (see Japanese Patent Application Laid-Open No. S64-26444).

Some pigments have two or more crystal types even when the chemical formula, composition and structure are the same, and are referred to as polymorph. Examples include types α, β and ε of copper phthalocyanine blue, and these have different absorption coefficients and refractive indices and hence different hues and covering properties. Organic pigments are not only used in the coating industry as coloring material but also in the electronics industry, for example, as a charge generation agent for electrophotography photoreceptors, a pigment for a recording medium such as CD-R and DVD-R, a coloring agent for toners and ink-jet printer inks, a color filter pigment for liquid crystal display devices, and a luminescent material for organic EL devices. To use organic pigments for the uses above, it is first important that they have high purity and specific absorption characteristics. Absorption characteristics depend on the chemical structure, particle size, crystal type and purity of the pigment. Many organic pigments in particular have a plurality of crystal types even when the chemical structure is the same, so ensuring high purity while controlling the crystal type is an important point in developing a novel organic pigment.

For example, various organic pigments have been used as a charge generation material for electrophotography photoreceptors, and there is a strong need for a pigment having high-sensitivity absorption characteristics for semiconductor laser light and near infrared light which represents the emission wavelength of LED light. As an organic pigment meeting this requirement, phthalocyanines have been studied extensively. Phthalocyanines vary in absorption spectrum and photoconductivity according to the crystal type as well as the type of the central metal, and in some reports a specific crystal type has been selected from phthalocyanines with the same central metal for electrophotography photoreceptors.

For metal-free phthalocyanines, the crystal type X has been reported to have high photoconductivity, and sensitivity to a near infrared light of 800 nm or more, while for copper phthalocyanines, the crystal type ε among many other crystal types has been reported to be most sensitive to long wavelengths. However, the type X metal-free phthalocyanine is of a metastable crystal type and difficult to manufacture to achieve stable quality. Although the ε type copper phthalocyanine has high spectral sensitivity to longer wavelengths compared to the α and β types of copper phthalocyanine, the sensitivity drops at 800 nm compared to 780 nm, and this makes it unfit for use for semiconductor lasers with fluctuating emission wavelength. It is known that copper phthalocyanine has electrostatic properties, dark decay and sensitivity that can vary significantly depending on whether the crystal type is α, β, γ or ε (see, for example, Senryo-To-Yakuhin, Vol. 24 No. 6, p.122 (1984)), and the spectral sensitivity has been also reported to vary because the absorption spectrum varies depending on the crystal type (see, for example, Denshi-Shashin-Gakkai-Shi, Vol. 22, No. 2, p.111 (1984)).

Thus the difference in electrical characteristics caused by the crystal type is well known with respect to metal-free phthalocyanines and many other metallophthalocyanines, and much effort has been made to produce a crystal type with satisfactory electrical characteristics. Many pigments are synthesized or subsequently treated in water to form primary particles adjusted for size and shape, and these particles are likely to agglutinate in subsequent processes, especially in the drying process, to form secondary particles. It is therefore necessary to fine these particles in the dispersion process.

Examples of general methods for controlling (fining) the crystal of an organic pigment include, in addition to the method of controlling it during the synthesis step, the so-called sulfuric acid method (see Japanese Patent Application Laid-Open No. H5-72773), such as the acid pasting method and the acid slurry method, a method involving dissolution or amorphous formation by grinding methods such as the solvent milling method, the dry milling method and the salt milling method followed by conversion to a desired crystal type (see Shikizai-Kyokai, et al., "41st Ganryo Nyumon Koza Textbook (1999)"), and a method involving heating dissolution of an organic pigment in a solvent under a heating condition followed by slow cooling for crystallization (see Japanese Patent Application Laid-Open No. 2003-160738). In addition, as a method for controlling the crystal type for organic thin films, the method of controlling sublimation temperature to attain a desired crystal type (see Japanese Patent Application Laid-Open No. 2003-003084) is commonly used.

In addition, as a novel pigment for manufacturing monocrystals and primary particles, a technology of the latent pigment has been disclosed (see, for example, Japanese Patent Application Laid-Open No. H9-048929, Japanese Patent Application Laid-Open No. H11-092695, Japanese Patent Publication No. 2001-513119 and Japanese Patent Publication No. 2002-514263) .

### DISCLOSURE OF THE INVENTION

### Problems to be solved by the invention

It is an object of the present invention to solve problems in pigments, pigment dispersions and pigment inks provided by conventional manufacturing methods, such as crystal mixing of pigments and pigment dispersions, wide particle size distribution of pigment dispersions, color irregularity of images produced with pigment inks using pigments and pigment dispersions, color development fluctuation among production lots of pigment dispersions, and clogging and unstable discharge of ink-jet inks.

Meanwhile, the conventional dispersion process of preparing pigment dispersions requires a grinding process to crush agglutinated pigments down to primary particles. However, it is difficult to obtain pigments consisting of particles of narrow particle size distribution and primary particles using mechanical crushing. In addition, the addition of excessive energy during the grinding process to decrease the particle size distribution and to attain the particle size of primary particles has destroyed primary particles. In other words, because primary particles are crystals in many cases, destruction causes lattice defects and so forth, leading to surface activation and resultant increased particle interaction between active surfaces. This interaction has been sometimes so strong as to cause pigment particles to reaggregate, resulting in reduced gloss and tinting strength. In addition, when the interaction was comparatively weak, pigment particles formed a structure called flocculate, resulting in a reduction in the fluidity of the dispersion system. Furthermore, exposure of the active surface has resulted in a rapid decrease in weather and water resistance.

Thus the conventional process of dispersing and grinding pigments has resulted in a decrease in original performance of the pigment as well as destabilization of the pigment dispersion. In addition, it was difficult to maintain a constant particle size in the grinding process, resulting in a dispersion that had wide particle size distribution. Consequently, if an ink-jet ink was produced using the pigment dispersion, which was produced by the above dispersion process and had instability as well as a wide particle size distribution, the ink was inferior in color development and image fastness (weather and water resistance) and subject to clogging and unstable discharge.

The above object may be attained by the present invention described below.
[1] A colored pigment being substantially of a primary particle maintaining type.
[2] The colored pigment which is obtained by transforming the molecular structure of a pigment monomolecule precursor.
[3] The colored pigment wherein the above pigment monomolecule precursor has a structure represented by any of the following general formulas (1-A), (1-B), (1-C) and (1-D), and a molecular structure transformation of the structure is caused to take place with a retro Diels-Alder reaction, 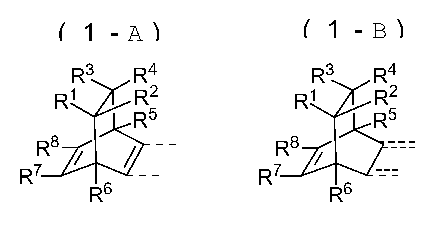 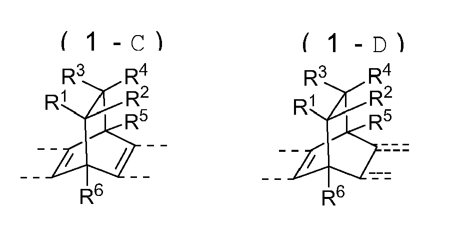 wherein R¹ to R⁴ independently represent a hydrogen atom or a directly or indirectly bonded group that imparts solubility with respect to a liquid medium, and R⁵ to R⁸ represent a hydrogen atom or a directly or indirectly bonded substituent.
[4] A process for producing a colored pigment that is substantially of a primary particle maintaining type, the process comprising the steps of dissolving or dispersing a pigment monomolecule precursor of the organic pigment in a liquid medium and transforming the molecular structure of the pigment monomolecule precursor to obtain the colored pigment.
[5] The process for producing a colored pigment, wherein the pigment monomolecule precursor is dissolved in the liquid medium.
[6] The process for producing a colored pigment, wherein the pigment monomolecule precursor has a structure represented by any of the following general formulas (1-A), (1-B), (1-C) and (1-D), and a molecular structure transformation of the structure is caused to take place with a retro Diels-Alder reaction, 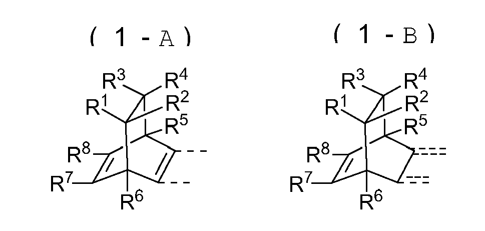 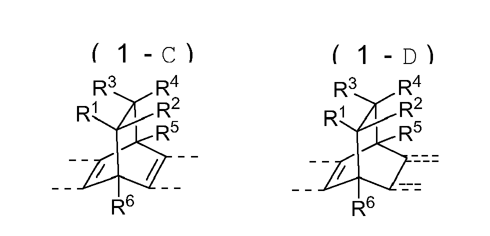 wherein R¹ to R⁴ independently represent a hydrogen atom or a directly or indirectly bonded group that imparts solubility with respect to a liquid medium, and R⁵ to R⁸ represent a hydrogen atom or a directly or indirectly bonded substituent.
[7] A dispersion comprising a colored pigment dispersed, the pigment being substantially of a primary particle maintaining type.
[8] The dispersion wherein the colored pigment is obtained by transforming the molecular structure of a pigment monomolecule precursor.
[9] The dispersion wherein the pigment monomolecule precursor has a structure represented by any of the following general formulas (1-A), (1-B), (1-C) and (1-D), and a molecular structure transformation of the structure is caused to take place with a retro Diels-Alder reaction, 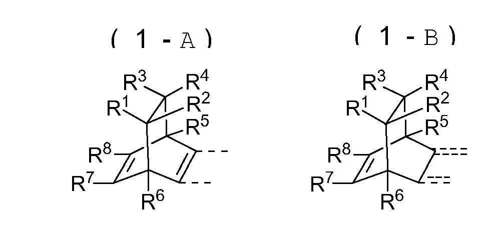 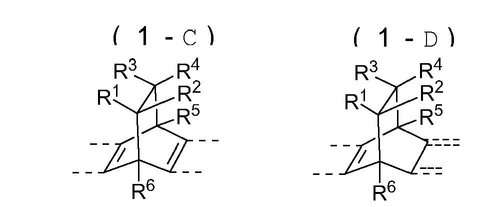 wherein R¹ to R⁴ independently represent a hydrogen atom or a directly or indirectly bonded group that imparts solubility with respect to a liquid medium, and R⁵ to R⁸ represent a hydrogen atom or a directly or indirectly bonded substituent.
[10] A process for producing a dispersion of a colored pigment that is substantially of a primary particle maintaining type, the process comprising the steps of dissolving or dispersing a pigment monomolecule precursor in a liquid medium, transforming the molecular structure of the pigment monomolecule precursor in the coexistence of the pigment monomolecule precursor and a dispersing agent for dispersing the colored pigment to obtain the colored pigment, and forming the organic pigment into an organic pigment dispersion.
[11] The process for producing a dispersion, wherein the pigment monomolecule precursor is dissolved in the liquid medium.
[12] The process for producing a dispersion, wherein the pigment monomolecule precursor has a structure represented by any of the following general formulas (1-A), (1-B), (1-C) and (1-D), and a molecular structure transformation of the structure is caused to take place with a retro Diels-Alder reaction, 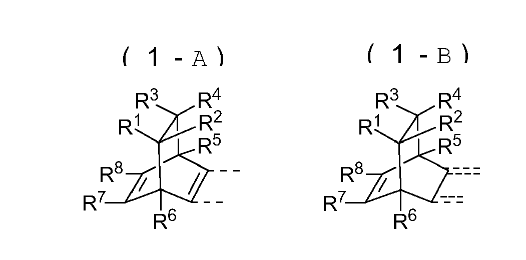 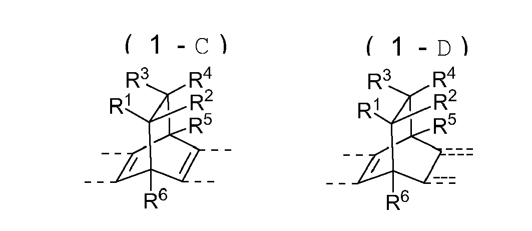 wherein R¹ to R⁴ independently represent a hydrogen atom or a directly or indirectly bonded group that imparts solubility with respect to a liquid medium, and R⁵ to R⁸ represent a hydrogen atom or a directly or indirectly bonded substituent.
[13] A recording ink comprising a colored pigment that is substantially of a primary particle maintaining type.
[14] A recording method comprising applying onto a recording medium a recording ink containing a colored pigment that is substantially of a primary particle maintaining type.
[15] A recorded image that is formed in a recording medium with a colored pigment that is substantially of a primary particle maintaining type.
   1. A colored pigment that is substantially of a primary particle maintaining type and a process for producing the pigment are provided, to obtain a high-purity pigment of a single crystal type.
   2. There are provided a pigment dispersion in which a colored pigment, being substantially of a primary particle maintaining type, is dispersed in a liquid medium and a process for producing the same, to obtain a pigment dispersion with satisfactory stability over time and a narrow particle size distribution.
   3. The dispersion of the present invention provides an ink with improved storage stability.
   4. The ink of the present invention provides a recording method in which stable discharge without clogging can be performed.
   5. The recording method of the present invention provides a satisfactory recorded image with good color development, sustained gloss and satisfactory weather resistance.

### BRIEF DESCRIPTION OF DRAWINGS

FIGS. 1A, 1B, 1C, 1D, 1E and 1F are schematic views showing a colored pigment according to the present invention which comprises substantially of primary particles maintained;
FIG. 2 is a view illustrating a process for producing a dispersion;
FIG. 3 is a view illustrating a process for producing a dispersion;
FIG. 4 is a view showing a process for producing a tetraazaporphyrin monomolecule precursor;
FIG. 5 is a view showing a process for producing a thioindigo monomolecule precursor;
FIG. 6 is a view showing a process for producing a quinacridone monomolecule precursor;

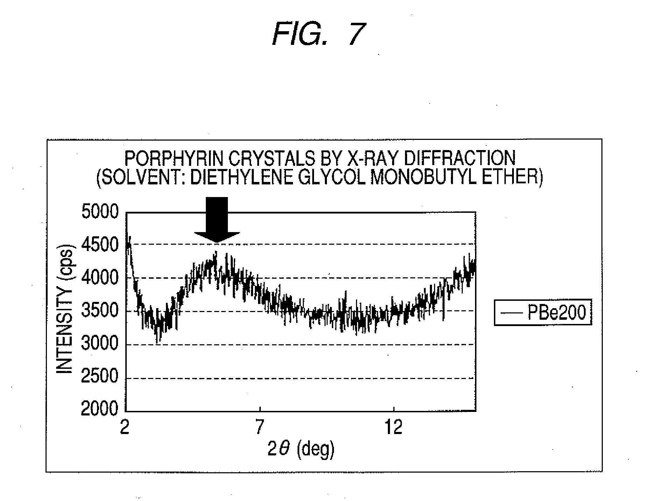

FIG. 7 presents measurement results from CuXα X-ray diffraction (XRD) of tetraazaporphyrin which is an organic pigment that is substantially of a primary particle maintaining type;
FIG. 8 presents measurement results from CuXα X-ray diffraction (XRD) of tetraazaporphyrin which is an organic pigment that is substantially of a primary particle maintaining type;
FIG. 9 is an image view describing the retro Diels-Alder reaction which is one of the means of transforming molecular structure of the present invention;
FIG. 10 is an image view describing the retro Diels-Alder reaction which is one of the means of transforming molecular structure of the present invention; and
FIG. 11 is an image view describing the retro Diels-Alder reaction of the present invention.

### BEST MODE FOR CARRYING OUT THE INVENTION

The present invention is further described in detail using the preferred embodiments below.

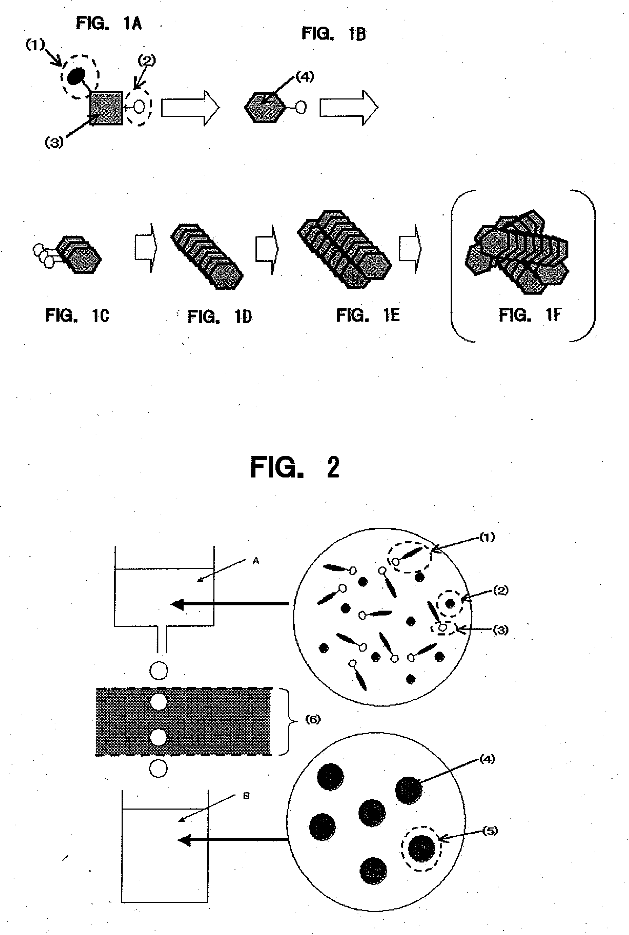

The "pigment monomolecule precursor" as used herein means, for example, a compound (for example, FIG. 1A) that has a multicyclic condensation structure (FIG. 1A (3)) and a chromophore (FIG. 1A (2)), and is formed into a pigment monomolecule (for example, FIG. 1B) when part of the multicyclic condensation structure (FIG. 1A (1)) is detached to form a ring structure (FIG. 1B (4)).

The "primary particle maintaining type" as used herein refers to a pigment monomolecule in a stable ring form obtained through transformation of the molecular structure of the multicyclic condensation structure of the pigment monomolecule precursor, or a cluster of these pigment monomolecules forming a crystal. The retro Diels-Alder reaction is preferably used for this molecular structure transformation. In addition, the primary particle maintaining type of the present invention means a column (for example, FIGS. 1C and 1D) of molecules with the same intermolecular distance or a cluster (for example, FIG. 1E) of the columns aligned in a coaxial direction, and in the particle size distribution 80% or more is found within an extremely narrow range. (In the figures, the chromophore is omitted for FIGS. 1D and 1E) The same intermolecular distance as used herein indicates that the molecules constituting a crystal have the same inclination angle for a crystal axis, or are of the same crystal type. The intermolecular distance may be determined, for example, by comparing the diffraction peak shape of 2θ from X-ray diffraction (XRD) using CuXα ray. For example, in the case of the phthalocyanine crystal (phthalocyanine pigment), X-ray diffraction (XRD) spectrum measurement may be used to distinguish between crystal types, such as type α, type β and type s, and to determine the mixed crystal state.

"A colored pigment" as used herein is a pigment that shows color development by exposure to visible light, or by excitation with non-visible light.

"A colored pigment that is substantially of a primary particle maintaining type" means a pigment that has at least the properties of the primary particle maintaining type and the colored pigment described above, and may additionally contain a small quantity of a pigment monomolecule precursor and a colored pigment having the cluster of columns described above arranged in a non-coaxial direction (for example, FIG. 1F) .

Surface treatment may also be applied by a conventional method. The above colored pigment has high purity and good color development since it consists of a single crystal type. In addition, because 80% or more of the particle sizes are limited within an extremely narrow range in the particle size distribution without a grinding process, the colored pigment is free from re-aggregation otherwise caused by crystal destruction, and hence stable.

Molecular structure transformation as used herein refers to a phenomenon in a compound in which when exposed to external energy (agitation, heat energy, light energy or combinations thereof), the molecular structure of the compound changes, such as, for example, a change from an organic compound soluble in solvent to another organic compound insoluble in the solvent as a result of eliminating a group having solvent affinity by exposure to energy, and also refers to a partial transformation from a multicyclic structure to a stable monocyclic structure by eliminating some atoms.

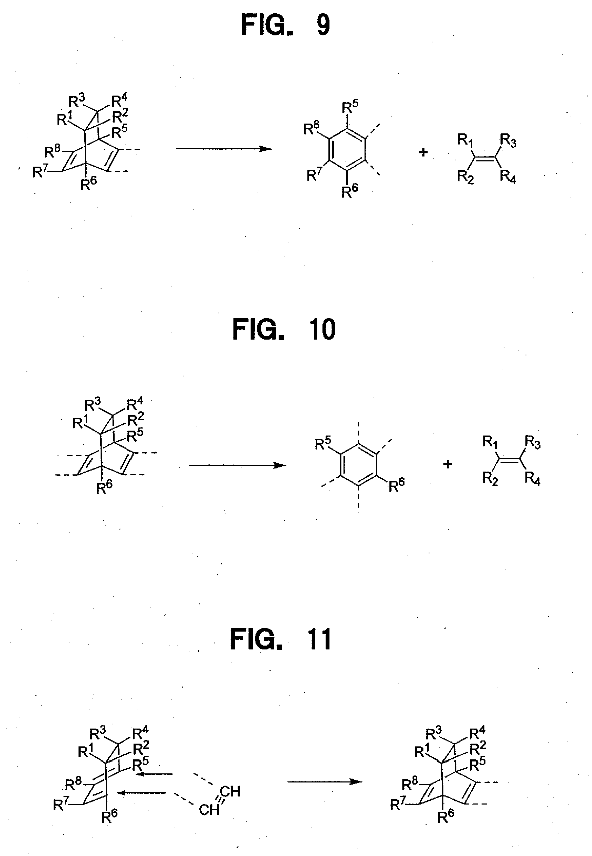

The "retro Diels-Alder reaction" as used herein means a reversed reaction of the Diels-Alder reaction, but unlike the general Diels-Alder reaction between diene and dienophile compounds, i.e., an equilibrium reaction (reversible reaction) of exothermic reaction (Diels-Alder reaction) and endothermic reaction (retro Diels-Alder reaction), an aromatic ring is formed as a result of partial elimination of a multicyclic condensed ring. This is a preferable molecular structure transformation of the present invention. For example, as shown in FIGS. 9 and 10, in a compound (precursor compound) having a condensed ring structure of bicyclo-[2,2,2]-octadiene skeleton, the bridge portion of the condensed ring structure is detached as an ethylene compound to form an aromatic ring (irreversible reaction).

In addition, the retro Diels-Alder reaction of the present invention means that the above ethylene compound is detached through a concerted reaction before the aromatic ring is formed. The concerted reaction refers to a reaction that forms no reactive intermediates, such as ions and radical species, and the elimination reaction of the ethylene compound is accomplished using only constituent elements within the molecule of the precursor compound. Thus, no impurities associated with the side reaction with the solvent or the like are generated during the process of elimination of the ethylene compound from the precursor compound, so that quantitative formation of an aromatic ring in both solid and liquid phase can be carried out. Given these features, a colored pigment having extremely high purity may be synthesized by eliminating an ethylene compound from a precursor compound followed by crystallization.

Furthermore, by introducing a substituent that enhances solvent solubility directly or indirectly into the elimination site (R¹, R², R³ and R⁴ in FIGS. 9 and 10), solvent solubility of a compound may be altered. In this case, an elimination portion with a group having solvent affinity is detached by the retro Diels-Alder reaction, resulting in a compound (solvent insoluble compound) with a π-conjugated system. In a preferred aspect, the molecular structure is designed such that a bulky structure of a molecule shifts to a flat structure as a result of formation of a π-conjugated system. In this way, the desired association and crystal properties of a compound (solvent insoluble compound) may be attained which is the molecular structure transformation product from a precursor compound (solvent soluble compound) according to the present invention by use of the retro Diels-Alder reaction.

In addition, the elimination portion detached from a pigment precursor compound of the present invention may be made extremely stable and safe by use of the retro Diels-Alder reaction, and the reaction may be designed to induce no reversible or subsidiary reaction that may have adverse effect on the system.

In addition, a structural portion undergoing the retro Diels-Alder reaction of the present invention may be formed using the Diels-Alder reaction as shown in FIG. 11. The reason is that because the reaction is an irreversible reaction unlike the general retro Diels-Alder reaction as shown in FIGS. 9 and 10, a stable crystal condition (preferably a homogeneous crystal) can be attained.

To realize the preferred aspect, a system is preferably designed such that after molecular structure transformation by the retro Diels-Alder reaction, intermolecular interaction due to hydrogen bond, van der Waals force, electrostatic interaction and polarity increases. In this way, even in a system of conventional structure that is otherwise difficult to control due to strong association, the crystal and association properties of a pigment formed of the molecular structure transformation product by the retro Diels-Alder reaction may be effectively altered by designing the properties of a compound before and after reaction as described above.

In addition, specific means for inducing the retro Diels-Alder reaction include application of external energy, and chemical perturbation (heat energy, light energy, electromagnetic wave energy, chemical action).

The method of transforming the molecular structure of a pigment monomolecule precursor by the retro Diels-Alder reaction to eliminate a target portion, according to the present invention, varies depending on the type of substituents R¹ to R⁴ of general formula (1) described above and molecular energy level before and after elimination. For example, an ethylene molecule is eliminated in normal thermal reaction when any of R¹ to R⁴ is hydrogen. Furthermore, it is known that with the increase in the resonance stabilization energy of an aromatic ring of a pigment monomolecule (molecule constituting a colored pigment that is substantially of a primary particle maintaining type) constituting a monocrystal, formed after elimination, activation energy increases and higher temperature is necessary for heating. In addition, it is known that when a ketone group is present at R¹ to R⁴, reaction occurs by n-π* excitation induced by visible light. Moreover, it is known that when a hydroxy group is present at R¹ to R⁴, reaction due to chemical action occurs as a result of electron drawing by a metal compound (basic compound). In this case it is necessary to take into account physical parameters of electric interaction between the leaving group and the metal and other parameters such as atomic radius.

Consequently, an elimination reaction may be evoked by various methods by considering substituents R¹ to R⁴ and the mechanism of elimination. When considering these factors, it is desirable to take into account the electric induction effect of substituents R⁵ to R⁸ of the general formula above on the reaction system. These elimination reactions may be either completed within one reactive species or induced simultaneously by combining multiple reaction systems, such as heating under chemical reaction and optical excitation. Alternatively, a complex process such as a sequential process (an intermediate product resulting from elimination by photoreaction is transformed into an end product by heating) may be used to establish an advanced elimination reaction system.

A pigment monomolecule precursor of the present invention is described in more detail. Examples of pigment monomolecule precursors include, for example, tetraazaporphyrin compounds represented by formula (I) or (II) below, thioindigo compounds represented by formula (III) below, acridone compounds represented by formula (IV) below, aminoanthraquinone compounds represented by formula (V) below, multicyclic condensed ring compounds represented by formula (VI) below and quinacridone compounds represented by formula (VII) below. The X and Y portions of pigment monomolecule precursors represented by these formulas have the structural portions represented by the general formulas (1-A), (1-B), (1-C) and (1-D) mentioned above. 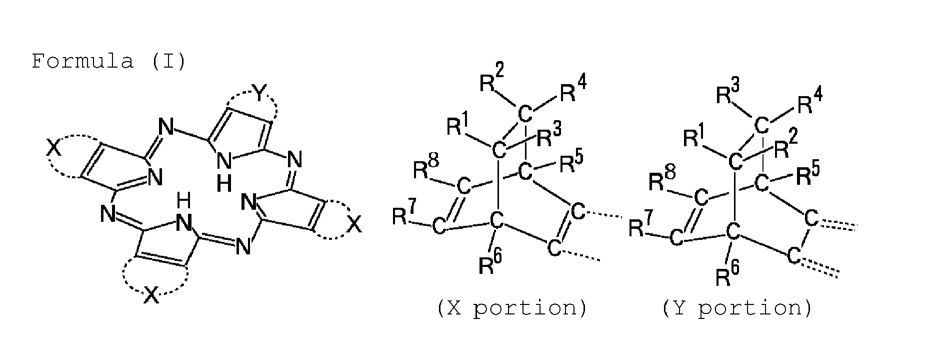 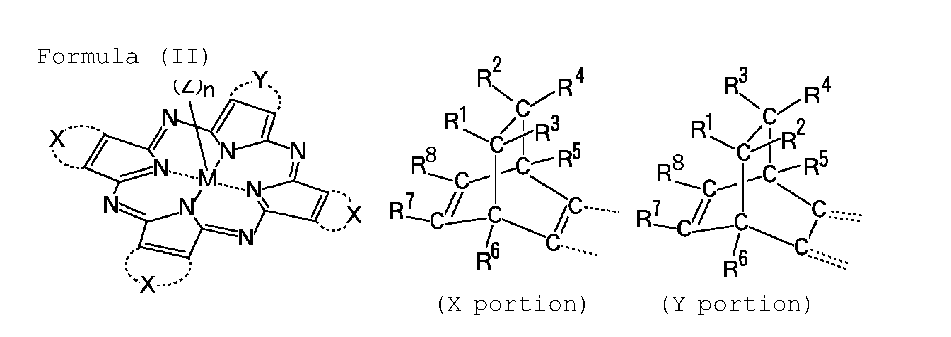 In the formulas (I) and (II) above, R¹ to R⁴ independently represent a hydrogen atom or a directly or indirectly bonded group that imparts solubility with respect to a liquid medium to a pigment monomolecule precursor, and R⁵ to R⁸ represent a hydrogen atom or a directly or indirectly bonded substituent. M is a coordinating metal atom of 2 to 4 valences, and Z is a halogen atom, oxygen atom or a hydroxy group, and n is an integer from 0 to 2. 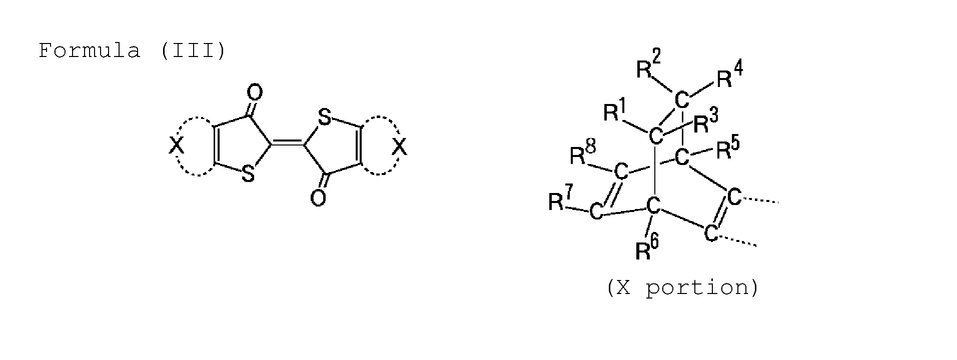 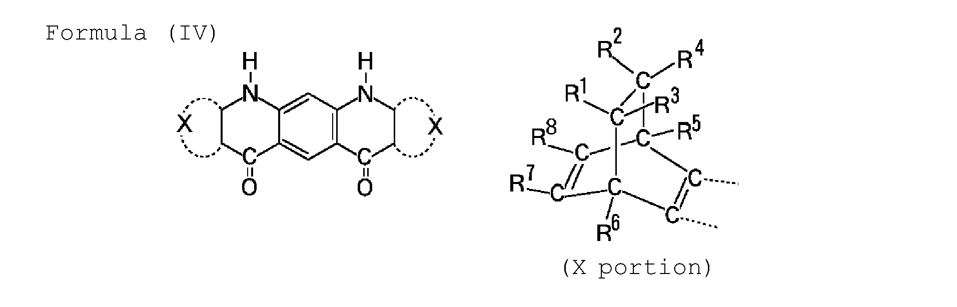 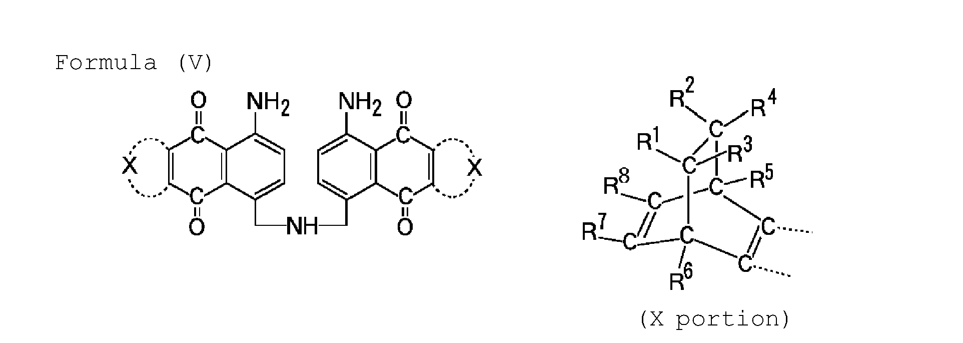 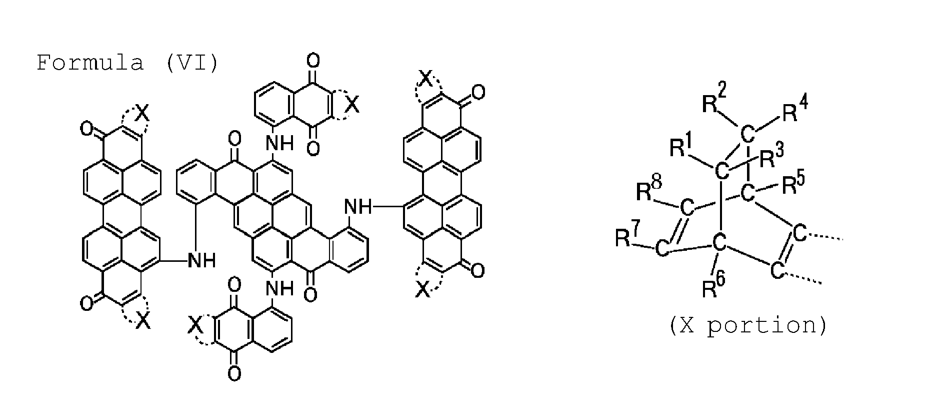 In the formulas (III) to (VI) above, R¹ to R⁴ independently represent a hydrogen atom or a directly or indirectly bonded group that imparts solubility with respect to a liquid medium to a pigment monomolecule precursor, and R⁵ to R⁸ represent a hydrogen atom or a directly or indirectly bonded substituent.

To be specific, R¹ to R⁴ represent a solubility-imparting group that binds directly or indirectly to an elimination portion, and R⁵ to R⁸ are not limited to a solubility-imparting group and represent a hydrogen atom or a substituent. R¹ to R⁴ are substituents that bind to the elimination portion and are detached along with the elimination portion, and R⁵ to R⁸ are substituents that are to be on an aromatic ring formed by elimination of the elimination portion.

As long as the object of the present invention is not impaired, i.e., as long as partial elimination of substituents R¹ to R⁴ and substituents R⁵ to R⁸ results in a "stable ring" formed from the multicyclic structure of a precursor, any combination thereof is possible. Energy, adducts/catalysts that will be required for elimination may be selected according to the structure. Specifically, substituents R¹ to R⁴ may be a hydrogen atom or a polar substituent that provides solubility with respect to a hydrophilic medium consisting of water and a water-soluble organic solvent, including an oxygen-containing system such as hydroxy groups, alcohol groups, alkylene oxide groups, carboxyl groups; a nitrogen-containing system such as amino groups; and a sulfur-containing system such as sulfone groups. In addition to polar groups, alkyl groups, aryl groups, alkoxy groups, mercapto groups, ester groups and halogen atoms may be used. Furthermore, as required, R¹ and R³, and R² and R⁴ may together form a ring.

When the liquid medium is water or an aqueous medium comprising water and a hydrophilic solvent, the above solubility-imparting group is directly or indirectly introduced so as to have a water solubility (at 25°C) of at least 1% by mass, and then an elimination site including the solubility-imparting group may be detached from a pigment monomolecule precursor by molecular structure transformation to insolubilize the pigment to produce a colored pigment that is substantially of a primary particle maintaining type.

Hydrophilic solvents include, for example, water and water soluble solvents having polarity, such as alcohol, glycol and amine solvents. When used for a liquid composition (ink) for ink-jet systems by introducing a pigment monomolecule precursor, a hydrophilic solvent known in the art may be used. In addition, the proportion of water in aqueous medium for ink-jet inks is usually 30% by mass or more.

Desirably, the colored pigment of the invention that is substantially of a primary particle maintaining type is produced by transformation using the retro Diels-Alder reaction of the molecular structure of a pigment monomolecule precursor dissolved or dispersed in a liquid medium.

In the method described above, transformation of the molecular structure of the pigment molecule precursor can be performed in liquid state using the retro Diels-Alder reaction by dissolving or dispersing the pigment monomolecule precursor in a liquid medium. By liquefaction, the retro Diels-Alder reaction may be allowed to occur to a pigment precursor in small reaction fields such as minute drops and fog, and then a minute-particle pigment with a narrow particle size distribution can be made. In addition, a conventional microreactor technique can also be employed. Concurrent use of a surface treatment agent in a liquid medium will enables a preparation of a surface-treated pigment. The concurrent use will also enable a production of a colored pigment, and especially a colored pigment of a smaller particle size because surface-treated pigment particles are resistant to aggregation.

Methods of manufacturing a surface-treated colored pigment that is substantially of a primary particle maintaining type are exemplified below. By atomizing a solution containing a pigment monomolecule precursor and a surface treatment agent so as to produce droplets of 1 pl or less, and applying to this atomized state sufficient energy to induce the retro Diels-Alder reaction to attain molecular structure transformation of the pigment monomolecule precursor, a surface-treated colored pigment that is substantially of a primary particle maintaining type may be produced in the atomized-solution state.

This method prevents the formation of a pigment with multiple crystal types resulting from a conventional manufacturing process involving a huge reaction field such as a large pot, and pigment aggregation requiring a grinding process for dispersion.

In the above colored pigment that is substantially of a primary particle maintaining type, preferably the pigment monomolecule precursor has a structure represented by any of the general formulas (1-A), (1-B), (1-C) and (1-D) below and the colored pigment is produced through conversion of the structure using the retro Diels-Alder reaction. 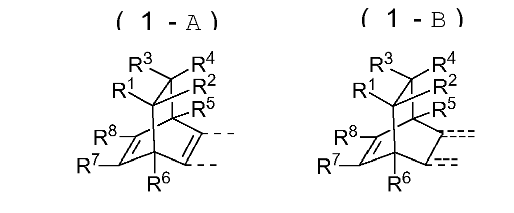 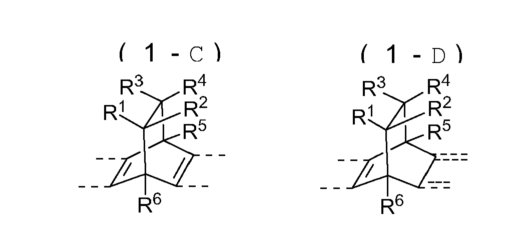 wherein R¹ to R⁴ independently represent a hydrogen atom or a directly or indirectly bonded group that imparts solubility with respect to a liquid medium, and R⁵ to R⁸ represent a hydrogen atom or a directly or indirectly bonded substituent.

By subjecting the above structural portion to the retro Diels-Alder reaction, no impurities associated with the side reaction with the reaction solvent or the like are generated during the reaction process to achieve quantitative formation of an aromatic ring in both solid and liquid phase, and the resultant pigment monomolecule is exempt from reversible reaction, and hence is stable. Consequently, monocrystals of a compound can be obtained easily.

The above colored pigment that is substantially of a primary particle maintaining type may be dispersed by a conventional dispersion method used for pigment to obtain a dispersion.

Examples include resin dispersion, activator dispersion, microencapsulation and self dispersion. The details of the dispersion method that can be used in the present invention are shown below.

As disclosed in Japanese Patent Application Laid-open No. S46-52950, U.S. Patent Nos. 5,200,164 and 5,554,739, Japanese Patent Application Laid-Open No. H8-3498, and U.S. Patent No. 5,571,311, dispersion methods include a method involving providing a hydrophilic group onto the surface of a pigment (pigment monomolecules constituting a monocrystal, a colored pigment consisting of monocrystals) via a diazonium group to form a water-dispersive self dispersion pigment, and a method involving oxidizing the surface of a coloring material with hypochlorous acid and so forth to cause reaction of a hydrophilic group, thereby forming a water-dispersive pigment.

Others include a method that involves including pigments in a surfactant or a polymer to form a water-dispersed emulsion or capsule, and a method that involves attaching a dispersant such as a surfactant and a polymer to the surface of a pigment by physical adsorption to form a water-dispersive pigment, as disclosed in Japanese Patent Application Laid-Open Nos. H05-179183, H06-136311, H07-053841, H10-87768, H11-043639, H11-236502 and H11-269418.

Examples of dispersants used in these methods include resins of styrene acrylic acid and styrene maleic acid copolymers formed by random polymerization or block polymerization; nonionic and anionic surface active agents capable of providing water-dispersive property in micelle or emulsion states; or a block, random or graft copolymer consisting of at least two monomers (at least one of which is a hydrophilic monomer) selected from the group consisting of styrene, styrene derivatives, vinylnaphthalene, vinyl naphthalene derivatives, aliphatic alcohol esters of α, β-ethylenically unsaturated carboxylic acid, acrylic acid, acrylic acid derivatives, maleic acid, maleic acid derivatives, itaconic acid, itaconic acid derivatives, fumaric acid, fumaric acid derivatives, vinyl acetate, vinylpyrrolidone, acrylamide and derivatives thereof, or salts thereof. A block copolymer among them is an especially preferable dispersant for embodiments of the present invention. A water-dispersive pigment obtained with a block copolymer has little variation among individual water-dispersive pigments, providing stable inks.

The block copolymer described above has a structure represented by types AB, BAB and ABC. A block copolymer that has a hydrophobic block and a hydrophilic block as well as balanced block sizes contributing to dispersion stability is particularly advantageous for use in the present invention. The ability to incorporate a functional group into a hydrophobic block (block to which pigment binds) further enhances the specific interaction between the dispersant and the pigment, which improves dispersion stability. In addition, the weight-average molecular weight of the polymer may be less than 30,000, preferably less than 20,000, more preferably in the range from 2,000 to 10,000.

Methods of manufacturing these polymers are disclosed in Japanese Patent Application Laid-Open Nos. H05-179183, H06-136311, H07-053841, H10-87768, H11-043639, H11-236502 and H11-269418.

Representative hydrophobic monomers which may be used for the block copolymer described above include, but not limited to, benzyl acrylate, benzyl methacrylate, methyl methacrylate (MMA), ethyl methacrylate (EMA), propyl methacrylate, n-butyl methacrylate (BMA or NBMA), hexyl methacrylate, 2-ethylhexyl methacrylate (EHMA), octyl methacrylate, lauryl methacrylate (LMA), stearyl methacrylate, phenyl methacrylate, hydroxylethyl methacrylate (HEMA), hydroxypropyl methacrylate, 2-ethoxyethyl methacrylate, methacrylonitrile, 2-trimethylsiloxyethyl methacrylate, glycidyl methacrylate (GMA), p-tolyl methacrylate, sorbyl methacrylate, methylacrylate, ethylacrylate, propylacrylate, butylacrylate, hexylacrylate, 2-ethylhexyl acrylate, octylacrylate, lauryl acrylate, stearyl acrylate, phenyl acrylate, 2-phenylethyl methacrylate, hydroxyethyl acrylate, hydroxypropyl acrylate, acrylonitrile, 2-trimethylsiloxy ethylacrylate, glycidyl acrylate, p-tolyl acrylate and sorbyl acrylate. Preferable hydrophobic monomers are benzyl acrylate, benzyl methacrylate, 2-phenylethyl methacrylate, methyl methacrylate, butyl methacrylate and 2-ethylhexyl methacrylate, and homopolymers and copolymers of these monomers, for example a copolymer of methyl methacrylate and butyl methacrylate, are preferably used to produce a block copolymer.

Representative hydrophilic monomers which may be used for the block copolymer include, but not limited to: methacrylic acid (MAA), acrylic acid, dimethylaminoethyl methacrylate (DMAEMA), diethylaminoethyl methacrylate, tert-butylaminoethyl methacrylate, dimethylaminoethyl acrylate, diethylaminoethyl acrylate, dimethylaminopropyl methacrylamide, methacrylamide, acrylamide and dimethylacrylamide. Preferably, a homopolymer or copolymer of methacrylic acid, acrylic acid or dimethylaminoethyl methacrylate is used to manufacture a block copolymer.

A polymer containing acid is produced either directly or from a blocked monomer having a blocking group that will be removed after polymerization. Examples of blocked monomers producing acrylic acid or methacrylic acid after removal of the blocking group include trimethylsilyl methacrylate (TMS-MAA), trimethylsilyl acrylate, 1-butoxyethyl methacrylate, 1-ethoxyethyl methacrylate, 1-butoxyethyl acrylate, 1-ethoxyethyl acrylate, 2-tetrahydropyranyl acrylate and 2-tetrahydropyranyl methacrylate.

While a dispersion can be obtained by preparing a colored pigment that is substantially of a primary particle maintaining type followed by dispersion, as shown above, the process for producing a dispersion of a colored pigment that is substantially of a primary particle maintaining type of the present invention described below may be used to obtain a more desired dispersion.

The process for producing a dispersion of a colored pigment that is substantially of a primary particle maintaining type of the present invention is described in detail.

The process for producing a pigment dispersion according to the present invention is characterized by the use of a colored pigment formed from a compound prepared by transforming the molecular structure of a pigment monomolecule precursor in the presence of the pigment monomolecule precursor and a dispersant to disperse the colored pigment, dissolved or dispersed in liquid medium. The retro Diels-Alder reaction is preferably used as means for transforming molecular structure to obtain a desired dispersion of a colored pigment.

Because this method makes it possible to perform both the manufacture of a colored pigment that is substantially of a primary particle maintaining type and the dispersion of the colored pigment in the same solution layer, there is no need for the drying process required in the conventional pigment production process, and pigment aggregation does not occur. Thus, because a grinding process is not required before the dispersion process, the harmful effect of interaction between active surfaces will be removed that results from destruction of primary particles otherwise caused by the grinding process. In addition, because the generation and dispersion rates of pigments can be controlled by controlling the rate of molecular structure transformation (for example, the progression of retro Diels-Alder reaction), a pigment dispersion of a narrow particle size distribution may be obtained when manufacturing a dispersion of a colored pigment that is substantially of a primary particle maintaining type.

Preferably, the pigment monomolecule precursor is dissolved in a liquid medium. Dissolution of the precursor in liquid medium allows efficient transformation of the molecular structure of the precursor to achieve efficient dispersion. This provides a pigment dispersion of a narrow particle size distribution.

The retro Diels-Alder reaction is preferable for the molecular structure transformation of the above pigment monomolecule precursor dissolved in liquid medium, and therefore the precursor preferably has a solubility-imparting group with respect to the liquid medium only via a portion subject to the retro Diels-Alder reaction. This is because the colored pigment that is substantially of a primary particle maintaining type may be made stable by eliminating completely the solubilization group of the pigment monomolecules generated by retro Diels-Alder reaction.

Preferably, the portion subject to the retro Diels-Alder reaction described above has the structure represented by any of the following general formulas (1-A), (1-B), (1-C) and (1-D): 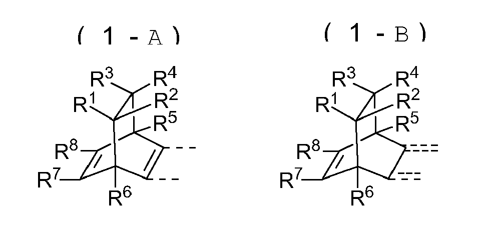 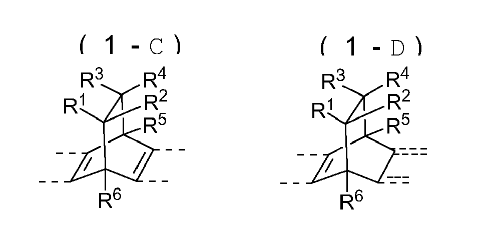 wherein R¹ to R⁴ independently represent a hydrogen atom or a directly or indirectly bonded group that imparts solubility with respect to a liquid medium, and R⁵ to R⁸ represent a hydrogen atom or a directly or indirectly bonded substituent.

By subjecting the above structural portion to the retro Diels-Alder reaction, a benzene ring is formed and prevents irreversible reaction, resulting in a stable pigment monomolecule. Consequently, monocrystals of a compound can be obtained easily.

The process for producing a pigment dispersion is described in detail below by reference to examples. However, the manufacturing method is not limited thereto and other methods may be selected as appropriate according to the desired dispersion form and particle size.

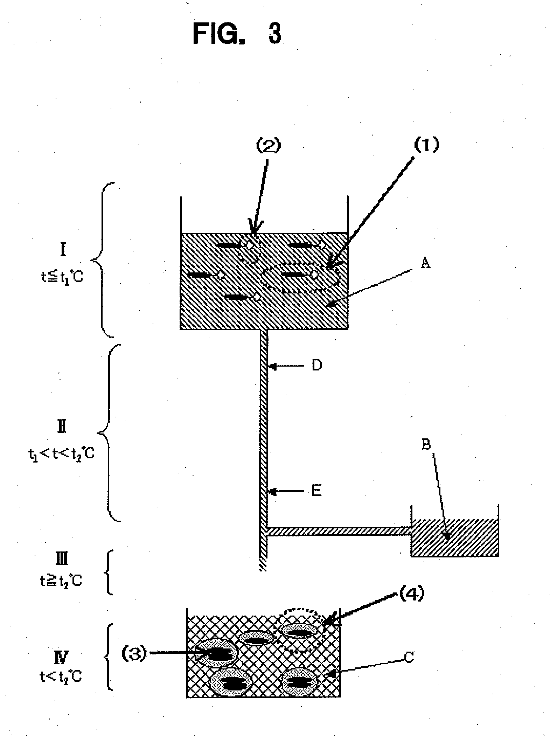

For example, a process for producing a microencapsulated colored pigment dispersion is described by reference to FIG. 2. A pigment compound precursor ((1) of FIG. 2), a capsule component ((2) of FIG. 2) and water are mixed to make mixture solution A. The mixture solution A is caused to passed through (6) of FIG. 2 under the atmosphere allowing for the above reaction and dropped into another liquid medium B. Reaction occurring during the dropping process leads to elimination of the part ((3) of FIG. 2) from the multicyclic condensed ring structure of the precursor, resulting in a colored pigment ((4) of FIG. 2). Evaporation of moisture from the dropped liquid mixture will result in a dispersion of encapsulated pigments ((5) of FIG. 2).

Another example is shown. Efforts have been made to attain pigment particles of the size of primary particles by surface treatment such as rosin treatment, surfactant treatment, resin dispersant treatment and pigment aggregate treatment. However, currently available pigments have extremely wide particle size distributions with a center particle size of secondary particles at best. Although the particle size distribution may be decreased by separating off larger pigment particles according to commercial uses, the efficiency for pigment production is low. This results in high production cost of pigments.

In contrast, the colored pigment prepared by the manufacturing method according to the invention makes use of the retro Diels-Alder reaction, so the particle size may be uniformized and 80% (preferably, 90%) or more of the particles are in the particle size range of minute particles equal to or smaller than primary particles. For example, a pigment with particles the particle size of 80% or more of which lies in the range of 10 nm to 12 nm may be provided. In a specific example, when a precursor has a reaction temperature in retro Diels-Alder reaction of T1 (°C), a liquid mixture of a surface treatment agent and the precursor is adjusted to (T1-20)°C in the first process to form a preliminary stage (here, -20°C represents an allowance to prevent reaching T1 in consideration of the temperature control ripple), and heat is applied to increase the temperature rapidly from the controlled region to (T1 +30)°C to induce the retro Diels-Alder reaction. In this way rapid reaction occurs and fine pigment particles are treated with a surface treatment agent without fail, so a suitable pigment for the pigment dispersion according to the present invention may be obtained. (If the crystal body aggregated, a pigment of desired particle size might be obtained easily because the binding power is weak.)

This is described in detail by reference to FIG. 3. A pigment monomolecule precursor ((1) of FIG. 3) is dissolved in solvent A which dissolves this precursor, and solution A is placed at an ambient temperature lower than t1 (temperature at which the retro Diels-Alder reaction does not occur) (FIG. 3, I). The ambient temperature of this solution is then increased gradually (FIG. 3, II). Point E is therefore in a higher-temperature environment than point D. Preferably, some arrangement is made such that the solution reaches a given ambient temperature quickly, for example by decreasing the diameter of the path. Solvent B which dissolves or disperses a surface treatment agent is introduced in the middle of the path, and after increasing the ambient temperature to t2 (temperature at which retro Diels-Alder reaction occurs) or more rapidly, the solvent is added dropwise (FIG. 3, III). A colored pigment ((3) of FIG. 3) that is substantially of a primary particle maintaining type is then produced by the retro Diels-Alder reaction. Droplets produced are put into solvent C at an ambient temperature of t2 or less to yield a surface-treated colored pigment ((4) of FIG. 3).

In this example, addition of a dispersant to disperse the colored pigment to solvent B will result in a dispersion of the colored pigment. In addition, a colored pigment is provided in the absence of the solvent B.

Next, an ink is described in detail which uses a dispersion of a colored pigment that is substantially of a primary particle maintaining type. The ink is prepared by dispersing the colored pigment in aqueous medium and so forth. An ink which is prepared by dispersing a colored pigment in aqueous medium is described, as follows.

The content of the pigment as a dispersion coloring material in the ink according to the present invention varies depending on the type of the recording material, for example, the type of the sizing agent, the amount of internal additive or the type of the solvent contained in the ink, and is preferably, but not limited to, less than 10% by mass, more preferably less than 4% by mass, assuming the commonly used recording material and solvent type. In addition, in light of desirable stability as dispersion coloring material, the content is preferably less than 2.5% by mass. The lower limit of the content of these pigments may be varied according to the desired image density.

In addition, when dispersing dispersants for resin dispersion, surfactant dispersion, etc., in a dispersion coloring material by physical adsorption or other methods, dispersion resins, surfactants, and the like may be used independently or in combination of two or more of them, if necessary, and the quantity of dispersant is preferably in the range from 0.5 to 10% by mass, more preferably from 0.8 to 8% by mass, more preferably from 1 to 6% by mass of the total quantity of the ink. When the content of the dispersant is higher than this range, maintaining the desired ink viscosity may become difficult.

Preferably, a mixed medium of water and water-soluble organic solvent is used as an aqueous medium for the ink according to the present invention. Any water-soluble organic solvent may be used as long as it is water soluble, and solvents that are generally used as inks for ink-jet printing systems may be used, including alcohol, polyhydric alcohol, polyglycol, glycol ether, nitrogen-containing polar solvents, sulfur-containing polar solvents, urea compounds, saccharides and derivatives thereof. These solvents are used to maintain moisture retention of ink and solubility of coloring material, and as a penetrant to recording paper. The solvents may be used independently or in combination.

The content of water-soluble organic solvents is preferably in the range from 1 to 50% by mass, more preferably from 3 to 40% by mass of the total mass of the ink. In addition, moisture content ink should be in the range of 30 to 95% by mass to maintain good solubility of the coloring material and ink discharge stability.

Furthermore, as required, the ink according to the present invention may contain, in addition to the components described above, various kinds of additives such as surfactants, pH regulators, antirust agents, antiseptic, anti-mold agents, antioxidants, reduction inhibitors, evaporation accelerators, chelating agents and water-soluble polymers.

Examples of surfactants include fatty acid salts, higher alcohol sulfates, liquid fatty oil sulfates, anion surfactants such as alkyl allyl sulfonates, polyoxyethylene alkyl ethers, polyoxyethylene alkyl esters, polyoxyethylene sorbitan alkyl esters, acetylene alcohol and nonionic surfactants such as acetylene glycol, and one or more of these may be selected as appropriate. Acetylene alcohols and acetylene glycols among them have superior permeability into plain paper and are preferably used. The quantity of surfactants added varies depending on the type, preferably ranging from 0.01 to 5% by mass of the total mass of ink. The surface tension of an ink at 25°C is preferably 10 mN/m (dyn/cm) or more, more preferably 20 mN/m (dyn/cm) or more, and the quantity of an activator added is preferably determined such that the surface tension will be 60 mN/m (dyn/cm) or less. This is because, in an ink-jet recording system usable in the present invention, the generation of shifted printing deviation (shift of the point of impact of ink droplets) due to wetting of the nozzle tip can be controlled effectively.

In addition, preferably the ink is adjusted to have a desired viscosity and pH values in order to provide ink-jet recording equipment with good discharge characteristics. Ink may contain pigment monomolecules (molecules constituting a crystal) constituting a monocrystal or a dispersion of colored pigments consisting of monocrystals as well as a dispersion of other pigments, dyes and pigment monomolecule precursors subject to the retro Diels-Alder reaction.

Recording media for a recorded image according to the present invention include common recording media, for example plain paper, and special media having thereon a coated layer or an ink-receiving layer, such as gloss paper, coated paper and gloss film. Of these, an example of a recording medium providing images having vividness, contrast and high transparency is a special medium having on its substrate a hydrophilic porous particle layer or a porous polymer layer.

An example of a special medium as a recording medium used in the present invention is further described. A coloring material such as dyes and pigments is adsorbed to fine particles forming a hydrophilic porous structure in an ink absorbing layer, and an image is formed at least by this coloring material. This recording medium is particularly suitable when an ink-jet method is used. Preferably, the recording medium like this is of the so-called absorbing type that absorbs ink by means of pores formed in the ink absorbing layer on the support.

An ink-receiving layer of the absorbing type is a hydrophilic porous layer mainly consisting of fine particles and, as required, containing a binder and other additives. Examples of fine particles include silica, clay, talc, calcium carbonate, kaolin, aluminum oxides such as alumina or hydrated alumina, diatom earth, titanium oxide, hydrotalcite, inorganic pigments such as zinc oxide and colored pigments such as urea formalin resin, ethylene resin and styrene resin, and one or more of these are used.

Preferably used binders include water-soluble polymers and latex. Examples include polyvinyl alcohol or modified products thereof, starch flour or modified products thereof, gelatin or modified products thereof, gum arabic, cellulose derivatives such as carboxymethyl cellulose, hydroxyethyl cellulose and hydroxypropyl methylcellulose, SBR latex, NBR latex, methyl methacrylate-butadiene copolymer latex, functional group modified polymer latex, ethylene-vinyl acetate copolymer and other vinyl copolymer latex, polyvinylpyrrolidone, maleic anhydride or copolymers thereof, acrylate copolymer, and a combination of two or more of these is used as required. Additives may also be used as required, including a dispersant, thickener, pH regulator, lubricant, flowability modifier, surfactant, antifoaming agent, release agent, fluorescent brightener, UV absorber and antioxidant.

The ink according to the present invention is used for heads of ink-jet discharge systems and is also useful to provide an ink storing container or an refill ink. The present invention is effective in particular when used for bubble-jet (R) recording heads and recording apparatus among ink-jet recording systems.

A typical and preferable configuration or principle has been disclosed, for example, in U.S. Patent Nos. 4,723,129 and 4,740,796. This system can be applied to the so-called on-demand and continuous types, and is particularly useful for the on-demand type, because by applying at least one driving signal that corresponds to recording information and causes a rapid temperature increase exceeding nuclear boiling to an electrothermal converter placed in correspondence to a sheet or a fluid path retaining ink, thermal energy may be generated in the electrothermal converter, and film boiling may be allowed to occur in thermal action face of a recording head, resulting in one-to-one correspondence to the driving signal and formation of bubbles in the ink. By the bubble development and contraction an ink is discharged through a discharge aperture, forming at least one droplet. Preferably this driving signal is of a pulse form, because immediate bubble development and contraction are ensured and highly responsive ink discharge is achieved. Suitable driving signals of pulse form have been disclosed in the specification of U.S. Patent Nos. 4,463,359 and 4,345,262. In addition, conditions described in the specification of U.S. Patent No. 4,313,124, regarding the rate of temperature rise in thermal action face, provide recording of superior quality.

In addition to the recording head configuration disclosed in the above specifications, combining a discharge aperture, a fluid path and an electrothermal converter (linear or right-angled fluid path), the present invention is also effective for the configuration disclosed in the specification of U.S. Patent Nos. 4,558,333 and 4,459,600, which describe a configuration in which a thermal action part is positioned in a bending region. The present invention is also effective for the configuration (Japanese Patent Application Laid-Open No. S59-123670) in which a discharge part that has a discharge aperture common to a plurality of electrothermal converters is provided. Furthermore, full-line recording heads having a length corresponding to the maximum width of the recording medium that can be recorded by recording equipment may include the configuration disclosed in the above specification that satisfies the length by combining multiple recording heads and a configuration having one integrally formed recording head, and the present invention can be made more effective using either configuration.

In addition, the present invention is also effective when used in an exchangeable chip type recording head enabling electric connection to the main equipment body and ink feeding from the main equipment body when installed in the main equipment body, and a cartridge type recording head integrally installed in the recording head. In addition, it is preferable that effectiveness of the present invention is further enhanced by adding a recovery means for the recording head and a spare auxiliary means, which are introduced as a component of the recording equipment. Specifically, these include a capping means, cleaning means, compression or aspiration means for the recording head, preheating means involving an electrothermal converter or other heating device, or a combination of these, and auxiliary discharge mode for conducting discharge not for recording.

### Examples

The following examples illustrate the present invention in detail, but are not intended to limit the scope of the invention. Unless stated otherwise, "part" and "%" as used herein are presented on a mass basis. The abbreviations below are used in the following description:
THF: tetrahydrofuran
DBU: 1,8-diazabicyclo-[5.4.0] undecene-7
DMF: dimethylformamide
LDA: lithium diisopropylamide

### [Exemplary synthesis 1] <Synthesis of a tetraazaporphyrin pigment monomolecule precursor>

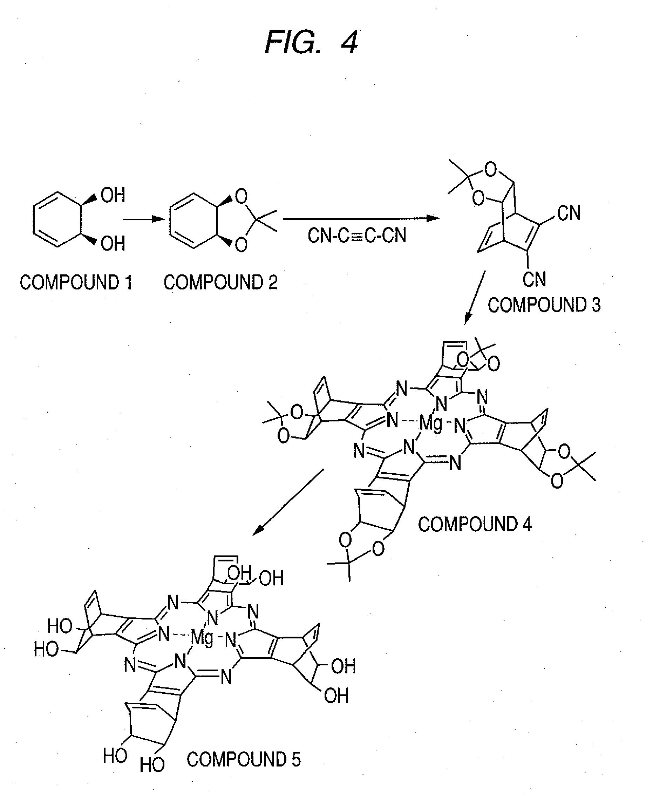

A tetraazaporphyrin pigment monomolecule precursor was synthesized according to the scheme in FIG. 4.

### (Synthesis of compound 2)

First, as a raw material, 20% ethyl acetate solution (25 ml) of 1,2-dihydroxy cyclohexadiene (compound 1) was prepared, and the solvent of the solution was concentrated under reduced pressure. Acetone (30 ml), 2,2-dimethoxy propane (69 ml), a trace amount of p-toluenesulfonic acid were added thereto, and stirred at room temperature for four hours. 10% sodium hydroxide solution (30 ml) and saturated salt solution (30 ml) were then added and stirred, reaction was stopped, and extraction with diethyl ether (3 x 30 ml) followed. The organic layer from the extraction was washed with saturated salt solution (3 x 30 ml), dried over anhydrous sodium sulfate and concentrated under reduced pressure. This resulted in 8.33 g of compound 2, which corresponds to compound 1 with its hydroxy group protected.

### (Synthesis of compound 3)

Compound 2 (158 mg) and dicyanoacetylene (230 mg) were placed in a reaction vessel, toluene (2.00 ml) was added and the mixture was stirred at 90°C for three hours. After the reaction completed, the reaction solution was concentrated under reduced pressure, and separated by column chromatography (packing material: silica gel, eluent: ethyl acetate/hexane having a polarity gradient in the range of 20-30% by volume). Because the reaction product was a mixture of two kinds of diastereomers, the fractions of Rf = 0.24 (20% by volume ethyl acetate/hexane) and Rf = 0.18 (20% by volume ethyl acetate/hexane) of the two kinds of isomer were mixed to conduct concentration. Recrystallization of the resultant gave 184 mg of compound 3. Compound 3 was confirmed to be the objective compound by the measurement of melting point (mp), NMR and infrared absorption spectrometry (IR).
· mp: 151.9-152.6°C
· ¹HNMR [solvent: CDCl₃, unit: δppm] 7.87 (m, 2H), 7.71(m, 1H), 7.59(m, 2H), 6.16(m, 2H), 4.81(dd, J=5.6, 2.4Hz, 1H), 4.33(dd, J=6.8, 2.9Hz, 1H), 4.19(dd, J=6.8, 2.9Hz, 1H), 4.04(dd, J=5.6, 1.5Hz, 1H), 3.70(m, 1H), 3.48(m, 1H) 1.28 (s, 3H), 1.22(s, 3H)
· IR[KBr method, unit:/cm⁻¹]2981w, 1552s, 1313s, 1151s, 1056s, 727.0m, 601.7m

### (Synthesis of compound 4)

Compound 3 (365 mg) was placed in a reaction vessel and dissolved in dry-THF (5.00 ml) after replacing the inside of the vessel with nitrogen gas. A solution of n-butoxy magnesium in n-butanol was added thereto and stirred with heating at 150°C to conduct 4-membered cyclization and metal complex formation. After the reaction completed, extraction with ethyl acetate (3 x 20.0 ml) was performed. After the extraction, the organic layer was washed with a saturated salt solution, dried over anhydrous sodium sulfate, concentrated under reduced pressure, separated by silica gel column chromatography (eluent: 5% by volume ethyl acetate /chloroform), and the Rf = 0.41 fraction (5% by volume ethyl acetate/chloroform) was concentrated and recrystallized to give 283 mg of compound 4. Compound 4 was confirmed to be the objective compound by the measurement of melting point (mp), NMR and infrared absorption spectrometry (IR).

### (Synthesis of compound 5)

Compound 4 (289 mg) was placed in a reaction vessel and dissolved in THF (5.00 ml) after replacing the inside of the vessel with nitrogen gas. 1N hydrochloric acid (114 mg) was added thereto and stirred at room temperature for one hour. After the reaction completed, a saturated sodium chloride solution (20 ml) was added to stop the reaction, and the reaction solution was washed successively with 1% sodium thiosulfate solution (50.0 ml) and saturated sodium chloride solution (50.0 ml). The resultant solution was concentrated under reduced pressure after drying over anhydrous sodium sulfate, purified by column chromatography (packing material: silica gel) and recrystallized to give water-soluble tetraazaporphyrin compound 5 (yield 39.8%) which is a tetraazaporphyrin precursor deprotected of the hydroxy group.

### [Exemplary synthesis 2]

### <Synthesis of thioindigo pigment consisting of crystals of the same orientation consisting of a thioindigo monomolecule precursor>

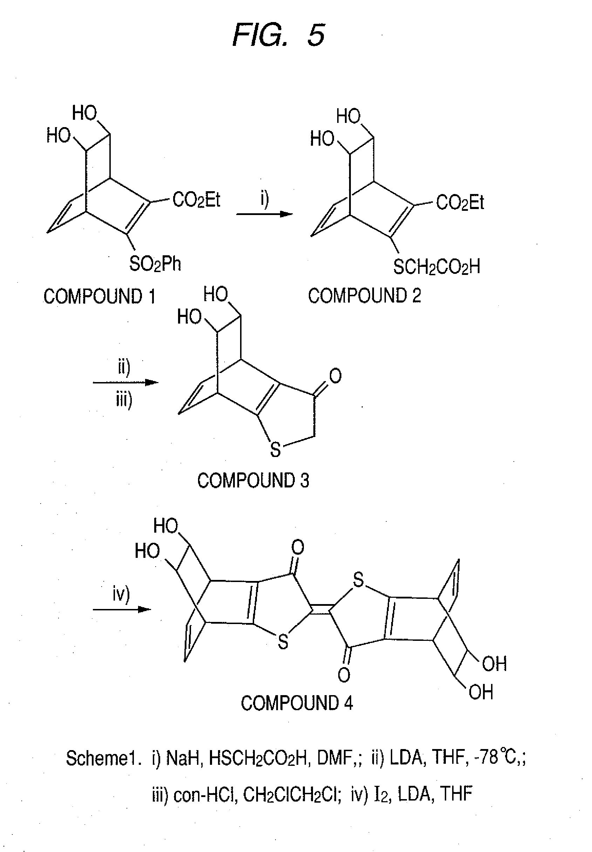

Thioindigo pigment consisting of crystals of the same orientation consisting of a thioindigo monomolecule precursor was synthesized according to the scheme described in FIG. 5.

First, compound 1, which was used for synthesis, was synthesized through the formation of a thiophenyl compound of propiolic ester, oxidation with dimethyldioxirane and Diels-Alder reaction with dihydroxy cyclohexadiene according to Tetrahedrn Letters, Vol. 22, No.35, pp3347-3350, 1981. Compound represented by [2] was then synthesized as described below using compound 1 represented by [1] in the formula below.

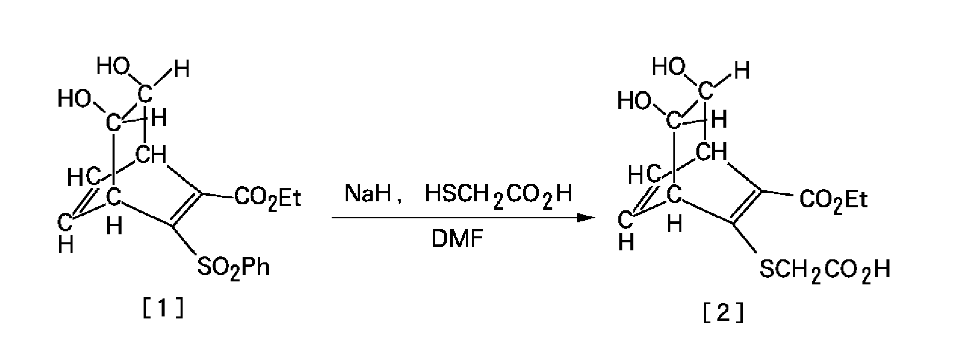

First, sodium hydride (NaH, 0.062 g, 2.60 mmol) was placed in a 50 ml round-bottom flask, dry-DMF (2 ml) was added after nitrogen purge, and cooled in water bath. Separately, the compound represented by [1] (0.200 g, 0.62 mmol) described above was placed in a 25 ml round-bottom flask, dry-DMF was added after nitrogen purge, thioglycolic acid (0.090 ml, 1.30 mmol) was added, and the mixture was dripped gradually into the 50 ml round-bottom flask prepared previously with a transfer tube, followed by stirring for one hour. After confirming the completion of the reaction by TLC (thin layer chromatography), a 0.1 M citric acid solution was added to the reaction vessel until pH 3, and extraction with ethyl acetate was performed. The organic layer from the extraction was washed with 5% HCl, dried over anhydrous sodium sulfate and concentrated under reduced pressure. Purification of the resultant concentrate by silica gel column chromatography (eluent: ethyl acetate/hexane) gave the objective compound [2] (0.29 g, yield: 87.8%). Compound represented by [3] was then synthesized as described below using compound 2 represented by [2] in the formula below.

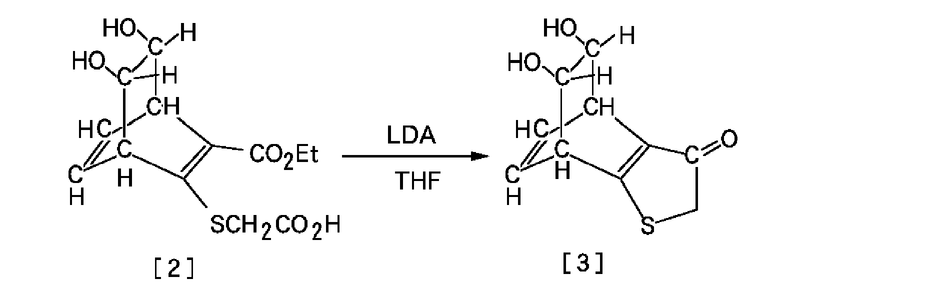

First, dry-THF (5.5 ml) and diisopropyl amide (0.68 ml, 4.84 mmol) were placed in a 25 ml round-bottom flask after nitrogen purge, cooled to 0°C, and n-butyllithium was dripped slowly thereto. The reaction vessel was cooled to -78°C. Separately, the compound represented by [2] (0.325 g, 1.21 mmol) was placed in a 25 ml round-bottom flask, dry-THF (2 ml) was added after nitrogen purge, and the mixture was dripped gradually into the above vessel with a transfer tube, followed by stirring for one hour. After confirming the completion of reaction by TLC, 5% HCl was added to the reaction vessel until pH 2, extraction with ethyl acetate was performed, and the organic layer was dried over anhydrous sodium sulfate and concentrated. The concentrate was then dissolved in dichloroethane, two to three drops of concentrated hydrochloric acid were added followed by stirring for five hours, washed with water, and dried over anhydrous sodium sulfate and concentrated. Purification by silica gel column chromatography (ethyl acetate/hexane) gave the objective compound [3] (0.16 g, yield: 74%).

Compound represented by [4] was then synthesized as described below using compound 3 represented by [3] in the formula below.

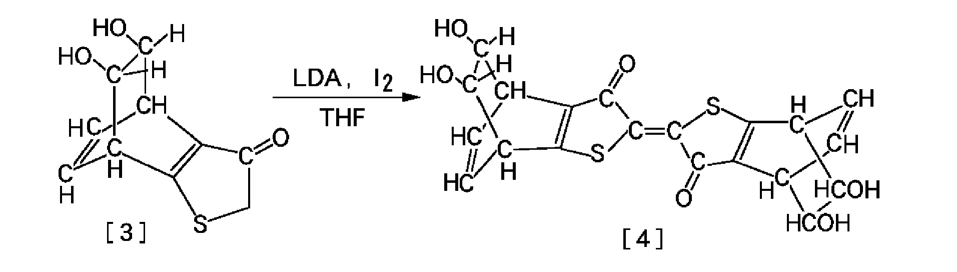

First, the compound represented by [3] above (0.120 g, 0.67 mmol) was placed in a 50 ml round-bottom flask, dry-THF was added after nitrogen purge, and the reaction vessel was cooled to -78°C. Separately, dry-THF (5.5 ml) and diisopropyl amide (0.68 ml, 4.84 mmol) were placed in a 25 ml round-bottom flask after nitrogen purge, cooled to 0°C, and n-butyllithium was dripped slowly thereto. This solution was added to the above 50 ml round-bottom flask by a transfer tube, iodine (0.102 g, 0.80 mmol) was then added and stirred for three hours. The reaction was stopped with water, extraction with ethyl acetate was performed. The organic layer from the extraction was dried over anhydrous sodium sulfate and concentrated under reduced pressure. Purification by silica gel column chromatography (ethyl acetate/hexane) gave the objective compound, a thioindigo monomolecule precursor represented by [4] (0.027 g, yield: 23%).

### [Exemplary synthesis 3] (Synthesis of a quinacridone pigment precursor)

### <Synthesis of a pigment monomolecule (molecules constituting a crystal) precursor>

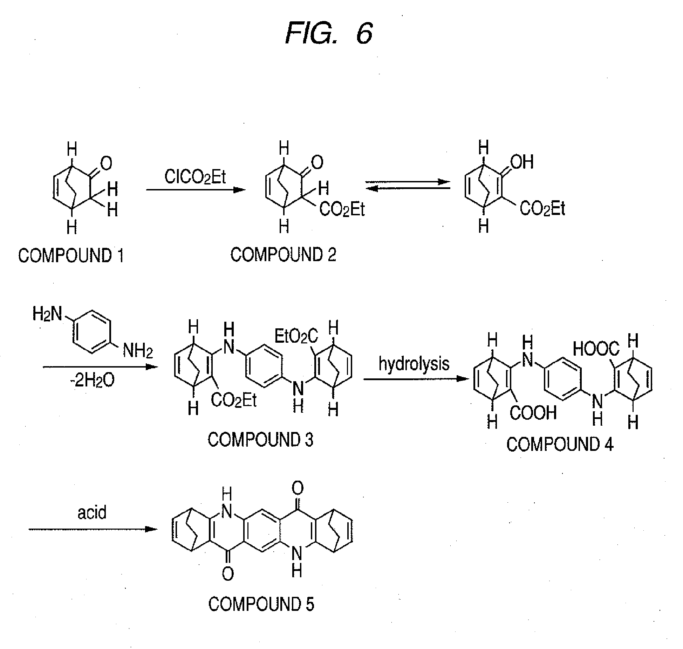

A quinacridone pigment precursor compound used in the implementation of the manufacturing method according to the present invention was synthesized according to the scheme described in FIG. 6.

### (Synthesis of compound 1)

Synthesis was according to J. Org. Chem., Vol.61, No.11, 1996, pp3794-3798.

### (Synthesis of compound 2)

Compound represented by [2] was synthesized as described below using compound 1 represented by [1] in the formula below.

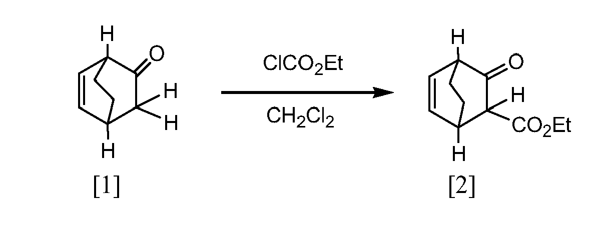

First, the compound represented by [1] (0.318 g, 2.60 mmol) was placed in a 50 ml round-bottom flask, dry-CH₂Cl₂ (2 ml) was added after nitrogen purge, and cooled in water bath. Separately, ethyl chloroformate (0.284 g, 2.62 mmol) was placed in a 25 ml round-bottom flask, dry-CH₂Cl₂ was added after nitrogen purge, and the mixture was dripped gradually into the above 50 ml round-bottom flask with a transfer tube, followed by stirring for one hour. After confirming the completion of the reaction by TLC (thin layer chromatography), the reaction was stopped and extraction with ethyl acetate was performed. The organic layer from the extraction was washed with 5% HCl, dried over anhydrous sodium sulfate and concentrated under reduced pressure. Purification of the resultant concentrate by silica gel column chromatography (eluent: EtOAc/hexane) gave the objective compound [2] (0.408 g, yield: 80.8%). (Synthesis of compound 3)

Compound represented by [3] was then synthesized as described below using compound 2 represented by [2] in the formula below.

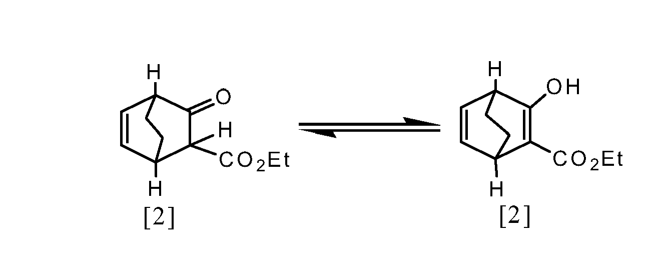

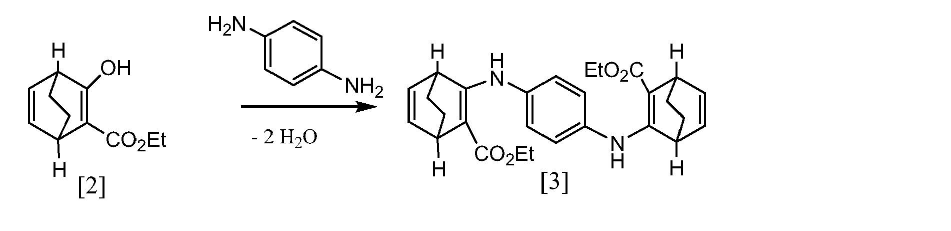

First, dry-Et₂O (5.5 ml) and the compound represented by [2] (0.777 g, 4.00 mmol) were placed in a 25 ml round-bottom flask after nitrogen purge and cooled. Separately, 1,4-phenylenediamine (0.216 g, 2.00 mmol) was placed in a 25 ml round-bottom flask, dry-Et₂O (2 ml) was added after nitrogen purge, and the mixture was dripped into the above round-bottom flask with a transfer tube, followed by stirring for one hour. After confirming the completion of the reaction by TLC, the reaction was stopped, extraction with ethyl acetate was performed, and the organic layer was dried over anhydrous sodium sulfate and concentrated. Purification by silica gel column chromatography (EtOAc/hexane) gave the objective compound [3] (0.690 g, yield: 75%).

### (Synthesis of compound 4)

Compound represented by [4] was then synthesized as described below using compound 3 represented by [3] in the formula below.

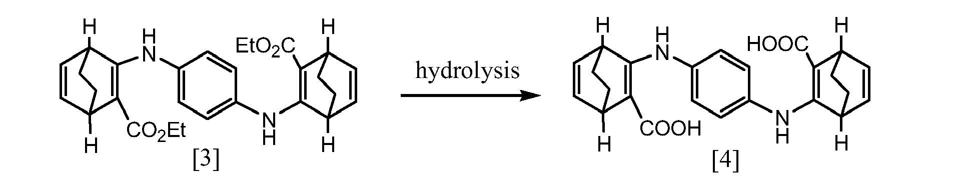

First, the above compound represented by [3] (0.921 g, 2.00 mmol) was dissolved in 30 ml of a DMSO (dimethyl sulfoxide) solvent in a 100 ml round-bottom flask. t-butoxy potassium was added thereto, and stirred with heating at 50°C overnight. After the completion of the reaction was confirmed by TLC, the reaction was stopped with water and extraction with ethyl acetate was performed. The organic layer from the extraction was dried over anhydrous sodium sulfate and concentrated under reduced pressure. Purification by silica gel column chromatography (EtOH/hexane) gave the objective compound [4] (0.728 g, yield: 90%).

### (Synthesis of compound 5)

Compound represented by [5] was then synthesized as described below using compound 4 represented by [4] in the formula below.

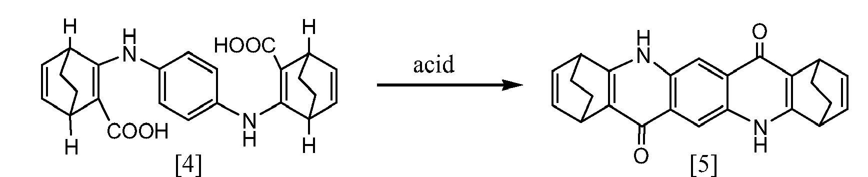

First, the above compound represented by [4] (0.808 g, 2.00 mmol) was dissolved in 30 ml of the solvent dry-DMSO (dimethyl sulfoxide) in a 100 ml round-bottom flask. Polyphosphoric acid was added thereto, and stirred with heating at 50°C overnight. After the completion of dewatering cyclization reaction was confirmed by TLC, the reaction was stopped with water and extraction with ethyl acetate was performed. The organic layer from the extraction was dried over anhydrous sodium sulfate and concentrated under reduced pressure. Lastly, purification by silica gel column chromatography (EtOAc/hexane) gave the objective compound, a quinacridone monomolecular precursor represented by [5] (0.331 g, yield: 45%).

### [Exemplary synthesis 4] <Synthesis of quinacridone monomolecular precursor 2>

A quinacridone monomolecular precursor (compound 5) of exemplary synthesis 3 was synthesized, in which all the solubility-imparting groups (R¹ to R⁴) of the bridge part, which are eliminated by the reverse Diels-Alder reaction, are carboxylic acid.

### Example 1

### <Manufacture of a colored pigment using the tetraazaporphyrin pigment monomolecular precursor prepared in Exemplary synthesis 1>

The tetraazaporphyrin pigment monomolecule precursor prepared in Exemplary synthesis 1 was dissolved in diethylene glycol monobutyl ether to make a 30% solution. This solution was dripped in a 200°C atmosphere to prepare a colored pigment of tetraazaporphyrin that is substantially of a primary particle maintaining type. This colored pigment was measured with X-ray diffraction (XRD) using CuXα ray to confirm the formation of the colored pigment as a result of the transformation of the pigment monomolecule precursor into pigment monomolecules by the retro Diels-Alder reaction.

### Example 2

### <Manufacture (1) of a pigment dispersion using the tetraazaporphyrin monomolecular precursor prepared in Exemplary synthesis 1>

First, using benzyl methacrylate and methacrylic acid as raw materials, an AB type block polymer of an acid value of 250 and a number-average molecular weight of 3,000 was prepared by conventional methods, neutralized with potassium hydroxide solution, and diluted in ion-exchange water to give a homogeneous 50% polymer aqueous solution. The tetraazaporphyrin monomolecular precursor prepared in Exemplary synthesis 1 above was dissolved in diethylene glycol monobutyl ether to make a 30% solution. 320 g of the 30% tetraazaporphyrin monomolecule precursor solution and 180 g of the polymer solution prepared above were mixed. This mixed solution was dripped into the aqueous solution so as to pass through a 200°C atmosphere to prepare an organic pigment dispersion.

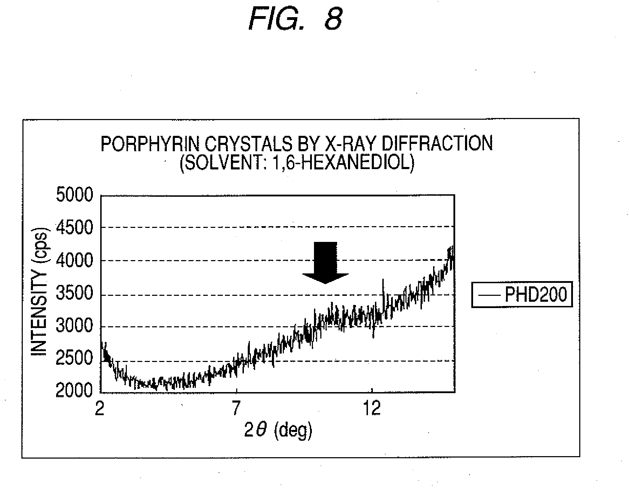

This pigment dispersion was measured with X-ray diffraction (XRD) using CuXα ray to confirm the transformation of the pigment monomolecule precursor into pigment monomolecules by the retro Diels-Alder reaction. The results are shown in FIG. 8.

### Example 3

### <Manufacture (2) of a pigment dispersion using the tetraazaporphyrin monomolecular precursor prepared in Exemplary synthesis 1>

First, using benzyl methacrylate and methacrylic acid as raw materials, an AB type block polymer of an acid value of 250 and a number-average molecular weight of 3,000 was prepared by conventional methods, neutralized with potassium hydroxide solution, and diluted in ion-exchange water to give a homogeneous 50% polymer aqueous solution. The tetraazaporphyrin monomolecule precursor prepared in Exemplary synthesis 1 above was dissolved in 1,6-hexanediol previously liquefied by heating to make a 30% solution. 320 g of the 30% tetraazaporphyrin monomolecular precursor solution and 180 g of the polymer solution prepared above were mixed. This mixed solution was dripped into the aqueous solution so as to pass through a 200°C atmosphere to prepare an organic pigment dispersion.

This pigment dispersion was measured with X-ray diffraction (XRD) using CuXα ray to confirm the transformation of the precursor of the pigment monomolecule (molecules constituting a colored pigment that is substantially of a primary particle maintaining type) precursor into pigment monomolecules by the retro Diels-Alder reaction. The results are shown in FIG. 11.

### Example 4

### <Manufacture (3) of a pigment dispersion using the tetraazaporphyrin monomolecular precursor prepared in Exemplary synthesis 1>

First, using benzyl methacrylate and methacrylic acid as raw materials, an AB type block polymer of an acid value of 250 and a number-average molecular weight of 3,000 was prepared by conventional methods, neutralized with potassium hydroxide solution, and diluted in ion-exchange water to give a homogeneous 50% polymer aqueous solution. The tetraazaporphyrin monomolecular precursor prepared in Exemplary synthesis 1 was dissolved in isopropyl alcohol to make a 30% solution. 320 g of the 30% tetraazaporphyrin monomolecule precursor solution and 180 g of the polymer solution prepared above were mixed. This mixed solution was dripped into the aqueous solution so as to pass through a 200°C atmosphere to prepare an organic pigment dispersion.

This pigment dispersion was measured with X-ray diffraction (XRD) using CuXα ray to confirm the transformation of the precursor of the pigment monomolecule (molecules constituting a colored pigment that is substantially of a primary particle maintaining type) into pigment monomolecules by the retro Diels-Alder reaction.

The pigment dispersion was then stirred mechanically for 0.5 hours. Then, using a micro fluidizer, this mixture was treated by allowing it to pass through an interaction chamber five times under liquid pressure of about 10,000 psi (about 70 Mpa) to give a dispersion liquid. In addition, the dispersion liquid was centrifuged (12,000 rpm, 20 minutes) to remove non-dispersed matter including coarse particles, giving dispersion liquid 1. Resultant dispersion liquid 1 had a pigment content of 10% and a dispersant content of 10%.

### Example 5

### <Manufacture of a pigment dispersion using the thioindigo monomolecular precursor prepared in Exemplary synthesis 2>

The thioindigo monomolecule precursor prepared in Exemplary synthesis 2 above was dissolved in octanol to make a 25% solution. 400 g of the 25% thioindigo monomolecule precursor solution and 100 g of the polymer solution used in Example 1 were mixed. This mixed solution was dripped into the aqueous solution so as to pass through a 200°C atmosphere to prepare an organic pigment dispersion.

This pigment dispersion was measured with X-ray diffraction (XRD) using CuXα ray to confirm the transformation of the precursor of the pigment monomolecule (molecules constituting a colored pigment that is substantially of a primary particle maintaining type) into pigment monomolecules by the retro Diels-Alder reaction. The pigment dispersion was then stirred mechanically for 0.5 hours.

Then, using a micro fluidizer, this mixture was treated by allowing it to pass through an interaction chamber five times under a liquid pressure of about 10,000 psi (about 70 Mpa) to give a dispersion liquid. The dispersion liquid was centrifuged (12,000 rpm, 20 minutes) to remove non-dispersed matter including coarse particles, giving dispersion liquid 2. Resultant dispersion liquid 2 had a pigment content of 10% and a dispersant content of 5%.

### Example 6

### <Manufacture of a pigment dispersion using the quinacridone monomolecular precursor prepared in Exemplary synthesis 3>

The quinacridone monomolecular precursor prepared in Exemplary synthesis 3 above was dissolved in octanol to make 25% solution. 400 g of the 25% thioindigo monomolecular precursor solution and 100 g of the polymer solution used in Example 1 were mixed. This mixed solution was dripped into the aqueous solution so as to pass through a 200°C atmosphere to prepare an organic pigment dispersion.

This pigment dispersion was measured with X-ray diffraction (XRD) using CuXα ray to confirm the transformation of the precursor of the pigment monomolecule (molecules constituting a colored pigment that is substantially of a primary particle maintaining type) into pigment monomolecules by the retro Diels-Alder reaction. The pigment dispersion was then stirred mechanically for 0.5 hours.

Then, using a micro fluidizer, this mixture was treated by allowing it to pass through an interaction chamber five times under a liquid pressure of about 10,000 psi (about 70 Mpa) to give a dispersion liquid. The dispersion liquid was centrifuged (12,000 rpm, 20 minutes) to remove non-dispersed matter including coarse particles, giving dispersion liquid 3. Resultant dispersion liquid 3 had a pigment content of 10% and a dispersant content of 5%.

### Example 7

### <Manufacture of a pigment dispersion using quinacridone monomolecular precursor 2 prepared in Exemplary synthesis 4>

The quinacridone monomolecular precursor prepared in Exemplary synthesis 4 above was dissolved in water to make 25% solution. 400 g of the 25% thioindigo monomolecular precursor solution and 100 g of the polymer solution used in Example 1 were mixed. This mixed solution was dripped into the aqueous solution so as to pass through a 200°C atmosphere to prepare an organic pigment dispersion. This pigment dispersion was measured with X-ray diffraction (XRD) using CuXα ray to confirm the transformation of the precursor of the pigment monomolecule (molecules constituting a colored pigment that is substantially of a primary particle maintaining type) into pigment monomolecules by the retro Diels-Alder reaction. The pigment dispersion was then stirred mechanically for 0.5 hours.

Then, using a micro fluidizer, this mixture was treated by allowing it to pass through an interaction chamber five times under a liquid pressure of about 10,000 psi (about 70 Mpa) to give a dispersion liquid. The dispersion liquid was centrifuged (12,000 rpm, 20 minutes) to remove non-dispersed matter including coarse particles, giving dispersion liquid 4. Resultant dispersion liquid 4 had a pigment content of 10% and a dispersant content of 5%.

### <Evaluation>

### (Dispersion stability)

To confirm the stability of the pigment dispersions prepared in Examples 2 to 7 above, 100 ml of each of these pigment dispersions was placed in a 100 ml glass vessel (Schott Company), tightly closed with a screw stopper and stored in an oven at a constant temperature of 60°C for two months. Measurement of viscosity and particle size before and after the experiment revealed no variation over this period. Consequently, production of a stable dispersion was confirmed.

### (Particle size)

Measurement of the particle size of the pigment dispersions prepared in Examples 2 to 7 above revealed that compared to those currently available, they had narrower particle size distributions, with 80% or more of the particles distributed within an extremely narrow range.

### Example 8

### <Ink using a pigment dispersion of Example 2>

Using the pigment dispersion from Example 2 and a solvent containing at least glycerol, ethylene glycol and water, an ink having a pigment concentration of 3.5% was prepared.

### <Evaluation>

### (Storage stability)

To confirm the stability of the ink prepared above, 100 ml of the dispersion was placed in a 100 ml glass vessel (Schott Company), tightly closed with a screw stopper and stored in an oven at 60°C for two months. Measurement of viscosity and particle size before and after the experiment revealed no variation over this period. Consequently, production of a stable dispersion was confirmed.

### (Color development)

The ink prepared above was filled in to an ink cartridge for Canon's PIXUS950i, and an image was formed using PIXUS950i, an ink-jet image forming apparatus. The media used was Canon's PR-101. The image formed was found to be vivid by visual observation.

### Example 9

### <Ink using a pigment dispersion of Example 5>

Using the pigment dispersion from Example 5 and a solvent containing at least glycerol, ethylene glycol and water, an ink having a pigment concentration of 3.5% was prepared. Evaluation of the resultant ink was performed as in Example 8. As a result, superior stability, color development and light resistance were confirmed as in Example 8.

### Example 10

### <Ink using a pigment dispersion of Example 6>

Using the pigment dispersion from Example 6 and a solvent containing at least glycerol, ethylene glycol and water, an ink having a pigment concentration of 3.5% was prepared. Evaluation of the resultant ink was performed as in Example 8. As a result, superior stability, color development and light resistance were confirmed as in Example 8.

### Example 11

### <Ink using a pigment dispersion of Example 7>

Using the pigment dispersion from Example 7 and a solvent containing at least glycerol, ethylene glycol and water, an ink having a pigment concentration of 3.5% was prepared. Evaluation of the resultant ink was performed as in Example 8. As a result, superior stability, color development and light resistance were confirmed as in Example 8.

Applications of the present invention include a novel recording method involving, for example, applying a precursor of a water-soluble pigment monomolecule (molecules constituting a pigment crystal) onto a recording medium and then heating to obtain insoluble pigments, thereby forming an image.

This application claims priority from Japanese Patent Application No. 2004-261710 filed on September 8, 2004, which is hereby incorporated by reference herein.

## Claims

1. A colored pigment being substantially of a primary particle maintaining type.

2. The colored pigment according to claim 1, which is obtained by transforming a molecular structure of a pigment monomolecule precursor.

3. The colored pigment according to claim 2, wherein the pigment monomolecule precursor has a structure represented by any of the following general formulas (1-A), (1-B), (1-C) and (1-D), and a molecular structure transformation of the structure is caused to take place with a retro Diels-Alder reaction, 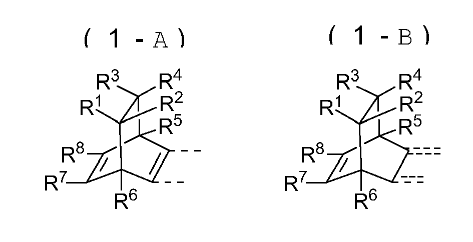 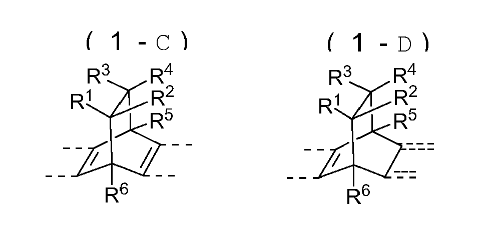 wherein R¹ to R⁴ independently represent a hydrogen atom or a directly or indirectly bonded group that imparts solubility with respect to a liquid medium, and R⁵ to R⁸ represent a hydrogen atom or a directly or indirectly bonded substituent.

4. A process for producing a colored pigment that is substantially of a primary particle maintaining type, the process comprising the steps of dissolving or dispersing a pigment monomolecule precursor forming the organic pigment in a liquid medium and transforming a molecular structure of the pigment monomolecule precursor to obtain the colored pigment.

5. The process for producing a colored pigment according to claim 4, wherein the pigment monomolecule precursor is dissolved in the liquid medium.

6. The process for producing a colored pigment according to claim 5, wherein the pigment monomolecule precursor has a structure represented by any of the following general formulas (1-A), (1-B), (1-C) and (1-D), and a molecular structure transformation of the structure is caused to take place with a retro Diels-Alder reaction, 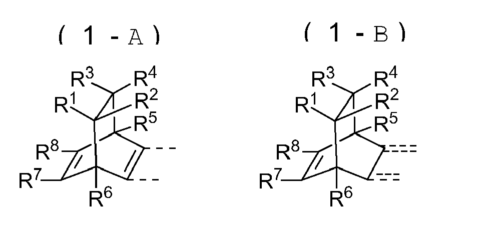 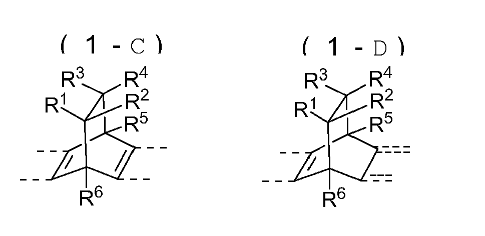 wherein R¹ to R⁴ independently represent a hydrogen atom or a directly or indirectly bonded group that imparts solubility with respect to the liquid medium, and R⁵ to R⁸ represent a hydrogen atom or a directly or indirectly bonded substituent.

7. A dispersion comprising a colored pigment dispersed therein, the pigment being substantially of a primary particle maintaining type.

8. The dispersion according to claim 7, wherein the colored pigment is obtained by transforming a molecular structure of a pigment monomolecule precursor.

9. The dispersion according to claim 8, wherein the pigment monomolecule precursor has a structure represented by any of the following general formulas (1-A), (1-B), (1-C) and (1-D), and a molecular structure transformation of the structure is caused to take place with a retro Diels-Alder reaction, 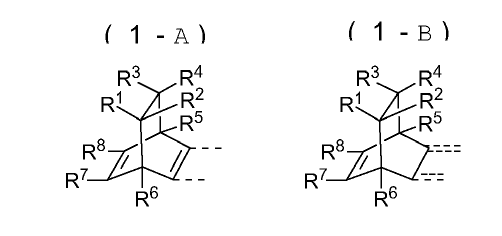 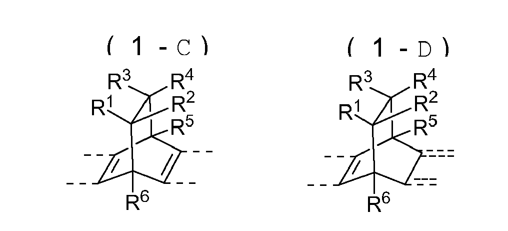 wherein R¹ to R⁴ independently represent a hydrogen atom or a directly or indirectly bonded group that imparts solubility with respect to a liquid medium, and R⁵ to R⁸ represent a hydrogen atom or a directly or indirectly bonded substituent.

10. A process for producing a dispersion of a colored pigment that is substantially of a primary particle maintaining type, the process comprising the steps of dissolving or dispersing a pigment monomolecule precursor in a liquid medium, transforming a molecular structure of the pigment monomolecule precursor in the coexistence of the pigment monomolecule precursor and a dispersing agent for dispersing the colored pigment to obtain the colored pigment, and forming the organic pigment into an organic pigment dispersion.

11. The process for producing a dispersion according to claim 10, wherein the pigment monomolecule precursor is dissolved in the liquid medium.

12. The process for producing a dispersion according to claim 11, wherein the pigment monomolecule precursor has a structure represented by any of the following general formulas (1-A), (1-B), (1-C) and (1-D), and a molecular structure transformation of the structure is caused to take place with a retro Diels-Alder reaction, 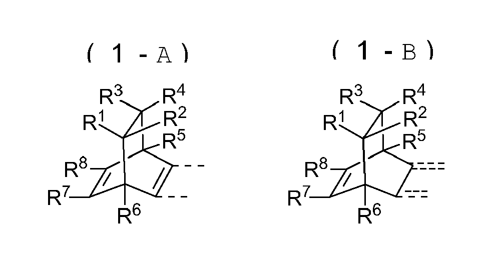 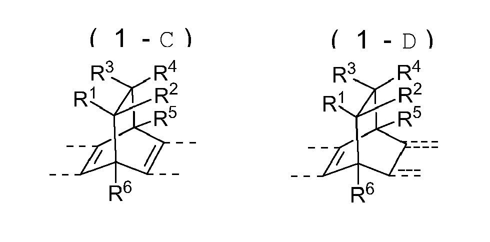 wherein R¹ to R⁴ independently represent a hydrogen atom or a directly or indirectly bonded group that imparts solubility with respect to the liquid medium, and R⁵ to R⁸ represent a hydrogen atom or a directly or indirectly bonded substituent.

13. A recording ink comprising a colored pigment that is substantially of a primary particle maintaining type.

14. A recording method comprising forming an image by an ink-jet recording method using an ink according to claim 13.

15. A recorded image that is formed by a recording method according to claim 14.
